# EUROPEAN PATENT SPECIFICATION

(11) **EP 2 087 958 B1**
(45) Date of publication and mention of the grant of the patent: **17.04.2013**
(21) Application number: 09250182.4
(22) Date of filing: 23.01.2009
(51) Int. Cl.: B23B 31/12

(54) **Auto locking chuck**
Selbstverriegelndes Futter
Mandrin auto-bloquant

(30) Priority: 07.02.2008 US 63933 P; 08.09.2008 US 206361
(43) Date of publication of application: 12.08.2009
(73) Proprietor: Techtronic Industries Company Limited, Tsuen Wan New Territories Hong Kong (CN)
(72) Inventor: Mok, Kwok Ting, Tokwawan (HK); Lam, Chin Hung, Tsuen Wan, New Territories (HK)
(74) Representative: Every, David Aidan

(56) References cited:
- US-A1- 2006 188 350
- US-B1- 6 179 301

## Description

### BACKGROUND

The present invention relates to a chuck according to the preamble of claim 1 and as know for example from US-A-2006/0188350. More particularly it relates to a chuck that may be locked or unlocked by rotating the drive shaft of a power tool.

Chucks are well known and are used in many applications. In general, a chuck is connected to the drive shaft of a power tool. One common example of the type of power tool that a chuck may be used on is an electric drill. However, chucks are also used on numerous other tools, such as screw drivers, nut drivers and grinders. Moreover, power tools may be powered by pneumatics, electricity, manual power or by other power sources. Chucks are generally used to grip the shaft of various work tools so that the work tool rotates with the drive shaft of the power tool. Typical types of work tools that may be used with a chuck include drill bits, screwdriver bits and grinding disks or stones.

A wide variety of chucks have been developed. The most common type of chuck that is employed uses three jaws to grip the shaft of a work tool. These types of chucks are able to securely grip shafts with both round and polygonal cross-sections. Typically, the jaws move towards each other in a smaller diametrical relationship as the chuck is tightened and move away from each other in a larger diametrical relationship as the chuck is loosened. Most chucks are designed so that the jaws have a relatively large range of movement. This allows a single chuck to grip many different work tools with different sized shafts.

Typically, chucks also have an adjustment mechanism that is used to tighten and loosen the jaws. Conventional adjustment mechanisms include an adjustment ring that is threaded to the jaws. Thus, when the adjustment ring, also referred to as a nut, is rotated, the threaded engagement between the adjustment ring and the jaws causes the jaws to move toward each other or away from each other depending on the direction the adjustment ring is rotated. Commonly, an outer sleeve that the user may operate by hand is provided which is fixedly attached to the adjustment ring. As a result, when the user rotates the outer sleeve in one direction, the jaws move towards each other in a tightening direction. Likewise, when the user rotates the outer sleeve in the opposite direction, the jaws move away from each other in a loosening direction. Other types of engagement structures may also be used. For example, some chucks use a key to rotate a sleeve that is fixedly attached to the adjustment ring. Typically in these chucks, the key engages a ring gear on the sleeve while being radially fixed to the body of the chuck. As a result, the sleeve rotates and threadably moves the jaws as the user rotates the key, thereby providing the user with increased leverage.

In general, however, most chucks that are commercially sold must be manually operated when tightening and loosening the jaws. This may make the use of a chuck time-consuming, since tightening and loosening often involves rotating the adjustment ring numerous times until the jaws are sufficiently tight against the work tool shaft or sufficiently loose to allow the work tool to be removed from the chuck. This may be a particular disadvantage in operations where a user is likely to use several different work tools during a job and may need to change work tools repeatedly. For example, this may be a problem in drilling and screwing jobs where a user needs to drill a number of pilot holes and then drive screws into the pilot holes. This may require numerous work tool changes between drill bits and driver bits during the course of the job. Because many conventional chucks must be manually operated, the time required to finish a job may be longer than desired and the user may tire before the job is done.

Another problem with manually operated chucks is that the user may sometimes fail to fully tighten the chuck. This may cause the jaws to lose their grip on the tool bit when the power tool is operated. Usually, this results in the power tool and the chuck spinning around the shaft of the tool bit without transferring rotational torque from the power tool to the tool bit. This can be particularly annoying and inconvenient to a user, especially in the middle of a long job where the user has had to manually change tool bits numerous times. Sometimes a user may also have difficulty loosening a chuck to remove the tool bit. This occurs when the user overtightens the chuck or may occur due to unintentional tightening of the chuck during use. This can also be frustrating and may increase the amount of time needed to finish a project.

More recently, auto locking chucks have been developed that do not require a user to hold the chuck sleeve during opening or closing of the jaws. Typical auto locking chucks have a mechanism that allows the chuck sleeve, which is rotationally coupled to the adjustment ring, to be selectively secured against rotation relative to the drill housing. This allows the adjustment ring to be held stationary while the drill is actuated to rotate the chuck to either open or close the jaws. Thus, the user may use one hand to hold the tool bit while the other hand actuates the drill. One disadvantage of typical auto locking chucks is that the tool bit may be rotated in the hand of the user as the jaws are tightened onto the tool bit, which may cause harm to the user. In addition, the tool bit tends to swing out from the chuck as it is being released from the jaws (i.e., during loosening).

US2006/188350 and US6179301 each disclose a chuck in which the drive shaft is screw-threadedly connected to the chuck body such that the chuck body rotates when the drive shaft rotates.

### BRIEF SUMMARY OF THE INVENTION

According to the invention there is provided a chuck for use with a power tool having the features of claim 1.

Preferably, the chuck further comprises an impact member and an impact plate, the impact member being configured to be rotationally coupled to the drive shaft of the power tool, the impact plate being rotationally coupled to the adjustment ring, the impact member being configured to engage the impact plate in auto-lock mode and not engage the impact plate in drill mode, the impact member and impact plate being configured to disengage from each other in auto-lock mode when a predetermined rotational force is transmitted therebetween.

Preferably, the impact member and impact plate each comprise at least one chamfered block having an angled surface, the angled surface of chamfered block of the impact member being configured to engage the angled surface of the chamfered block of the impact plate when in auto-lock mode, further wherein the angled surface of chamfered block of the impact member is configured to slide over the angled surface of the chamfered block of the impact plate when the predetermined rotational force is transmitted between the impact member and the impact plate, thereby allowing the impact member to rotate relative to the impact plate.

Preferably, at least one of the impact member and the impact plate is axially movable along the longitudinal axis of said body.

Preferably, the impact member is configured to be axially movable relative to the drive shaft between a first position when in the drill mode and a second position when in the auto-lock mode, the impact member not being engaged with the impact plate when in the first position and being engaged with the impact plate when in the second position.

Preferably, the impact member is selectively rotationally coupled to the body, the impact member being rotationally coupled to the body in drill mode and being rotatable relative to the body in auto-lock mode.

Preferably, the impact member comprises a ring gear that is engage with a set of planetary gears operably connected to the body, the planetary gears being configured to engage a sun gear on the drive shaft, further wherein the impact member is locked against rotation relative to the housing when in drill mode to thereby permit the body to be rotatably driven by the drive shaft, and further wherein the body is locked against rotation relative to the housing when in auto-lock mode to thereby permit the impact member to be rotatably driven by the drive shaft.

Preferably, the mode selector comprises a mode sleeve operatively connected to the impact member such that rotational movement of the mode sleeve between auto-lock and drill modes causes axial translation of the impact member into or out of engagement with the impact plate.

Preferably, a lock mechanism is operatively connected to the mode sleeve and is configured to be rotationally coupled to the housing of the power tool, the lock mechanism being axially movable so as to selectively lock the body against rotation relative to the housing when in auto-lock mode.

In a first particular aspect of the invention the lock mechanism preferably comprises a shift block that selectively engages a chuck shell in auto-lock mode, the chuck shell being rotationally secured to the forward portion of the body.

Preferably, the shift block comprises an outwardly projecting post that engages a groove disposed on an interior surface of the mode sleeve, the groove being configured to cause axial movement of the shift block upon rotation of the mode sleeve.

Preferably, a portion of the groove is helically disposed about the interior surface of the mode sleeve.

Preferably, the post extends through a channel longitudinally disposed in a shift block, the shift block being configured to be rotationally coupled to the housing of the power tool.

In a second particular aspect of the invention the lock mechanism preferably comprises a join member that selectively engages the rearward portion of the body in auto-lock mode.

Preferably, the join member comprises an outwardly projecting boss that engages a groove disposed on an interior surface of the mode sleeve, the groove being configured to cause axial movement of the join member upon rotation of the mode sleeve.

Preferably, a portion of the groove is helically disposed about the interior surface of the mode sleeve.

Preferably, the join member comprises a front set of ribs that selectively engage the impact member in drill mode, the join member further comprising a rear set of ribs that selectively engage the body in auto-lock mode.

Preferably, the rear set of ribs are configured to engage slots on a gearbox housing operably connected to the power tool so as to rotationally couple the join member to the power tool.

Preferably, the impact plate is axially movable relative to the adjustment ring to permit the impact plate to disengage from the impact member in auto-lock mode when the predetermined rotational force is transmitted between the impact member and the impact plate.

Preferably, a biasing spring is operably engaged with the impact plate so as to bias the impact plate into engagement with the impact member in auto-lock mode.

Preferably, the biasing spring is disposed about a nut sleeve, the nut sleeve being rotationally coupled to the adjustment ring.

Preferably, the body is configured to be selectively rotationally coupled to one of a tool housing, a gearbox housing, and a stationary component of the power tool.

Preferably, the chuck further comprises a power tool having a housing and a rotatable drive shaft, wherein the rearward portion of the body is selectively rotationally coupled to the drive shaft in drill mode and is rotatable relative to the housing in auto-lock mode.

Preferably, the housing comprises one of a tool housing, a gearbox housing, and a stationary component affixed to the power tool.

Further aspects of the invention will become apparent from the following description which is given by way of example only.

### BRIEF DESCRIPTION OF THE DRAWINGS

The invention may be more fully understood by reading the following description in conjunction with the drawings, in which:

Figure 1 is a perspective view of one embodiment of a chuck according to the present invention operably coupled to a gearbox and electric motor of a power tool;

Figure 2 is a perspective view of the output shaft of the chuck of Fig. 1 coupled to a power tool gearbox drive shaft;

Figures 3-4 are perspective views of the output shaft sub-assembly of the chuck of Fig. 1;

Figures 5a-5b are perspective views of an impact member for use with the chuck of Fig. 1;

Figures 6a-6b are perspective views of the impact member of Figs. 5a-5b mounted on the output shaft assembly of Figs. 3-4, wherein Fig. 6a illustrates the components in drill mode and the Fig. 6b illustrates the components in auto-lock mode;

Figures 6c-6d are cross-sectional views of Figs. 6a-6b, respectfully;

Figure 7a is a perspective view of a shift block mounted to sub-assembly of Figs. 6a-6b;

Figure 7b is a sectional view of Fig. 7a;

Figures 8a-8b are perspective views of the shift block illustrated in Figs. 7a-7b;

Figure 9 is a perspective view of the spring plate holder for use with the chuck of Fig. 1;

Figures 10a-10b are perspective views of the spring plate holder of Fig. 9 assembled to the sub-assembly of Figs. 7a-7b, wherein Fig. 10a illustrates the components in drill mode and the Fig. 10b illustrates the components in auto-lock mode;

Figures 11a-11b are perspective views of a mode sleeve assembled to the sub-assembly of Figs. 10a-10b, wherein Fig. 11 a illustrates the components in drill mode and the Fig. 11b illustrates the components in auto-lock mode;

Figure 12 is a perspective view of the mode sleeve illustrated in Figs. 11a-11b;

Figures 13 is a perspective view of a sub-assembly of the forward portion of the chuck of Fig. 1;

Figure 14 is an exploded view of Fig. 13;

Figure 15 is a perspective view of the nut sleeve of Figs. 13-14 and related components;

Figure 16 is a perspective view of an anti-lock open plate for use with the chuck of Fig. 1;

Figure 17 is a side view of an impact plate assembled to the sub-assembly shown in Fig. 13;

Figure 18 is a perspective view of the impact plate shown in Fig. 17;

Figure 19 is a perspective view of a biasing spring and related components assembled to the sub-assembly shown in Fig. 17;

Figures 20a-20b are perspective views of the sub-assembly shown in Figs. 6a-6b assembled to the sub-assembly shown in Fig. 19, wherein Fig. 20a illustrates the components in drill mode and the Fig. 20b illustrates the components in auto-lock mode;

Figure 21 is a perspective view of the fully assembled forward portion of the chuck of fig. 1;

Figure 22 is a perspective view of the chuck shell shown in Fig. 21;

Figure 23 is a perspective view of the lock plate shown in Fig. 22;

Figures 24a-24b are perspective views showing the selective engagement between the shift block of Figs. 7a-7b with the chuck shell of Fig. 21, wherein Fig. 24a illustrates the components in drill mode and the Fig. 24b illustrates the components in auto-lock mode;

Figure 25 is a perspective view of a second embodiment of a chuck according to the present invention operably coupled to a gearbox and electric motor of a power tool;

Figure 26 is a perspective view of the electric motor, gearbox and gearbox drive shaft of the power too shown in Fig. 25;

Figures 27a and 27b are, respectfully, a perspective view and a cross-sectional view of the chuck body of the chuck of Fig. 25;

Figures 28-31 are perspective views of the chuck body of shown in Fig. 27a with various components assembled thereto;

Figure 32 is a perspective view of a guide plate for use with the chuck of Fig. 25;

Figures 33-34 are perspective views of the forward portion of the chuck of Fig. 25 with various components assembled thereto;

Figures 35a and 35b are, respectfully, a perspective view and a cross-sectional view of the chuck shell and forward portion of the chuck of Fig. 25;

Figures 36a and 37a are perspective views of a join member operably connected to the sub-assembly shown in Fig. 34, wherein Fig. 36a illustrates the components in drill mode and the Fig. 37b illustrates the components in auto-lock mode;

Figures 36b and 37b are partial cross-sectional views of Figs. 36a and 36b, respectfully;

Figures 38a-38b are perspective views of the join member shown in Figs. 36-37;

Figure 39 is a perspective view of a mode sleeve for use with the chuck of Fig. 25;

Figures 40a-40b are perspective views of the mode sleeve shown in Fig. 39 operably connected to the join member shown in Figs. 38a-38b, wherein Fig. 40a illustrates the components in drill mode and the Fig. 40b illustrates the components in auto-lock mode;

Figures 41-43 are perspective views of an alternative construction of the nut and impact plate shown in Figs. 30-33;

Figure 44 is a perspective view of an alternative construction of the nut sleeve and spring seat shown in Fig. 34; and

Figures 45-47 are perspective views of an alternative construction of the mode sleeve shown in Fig. 39.

### DETAILED DESCRIPTION

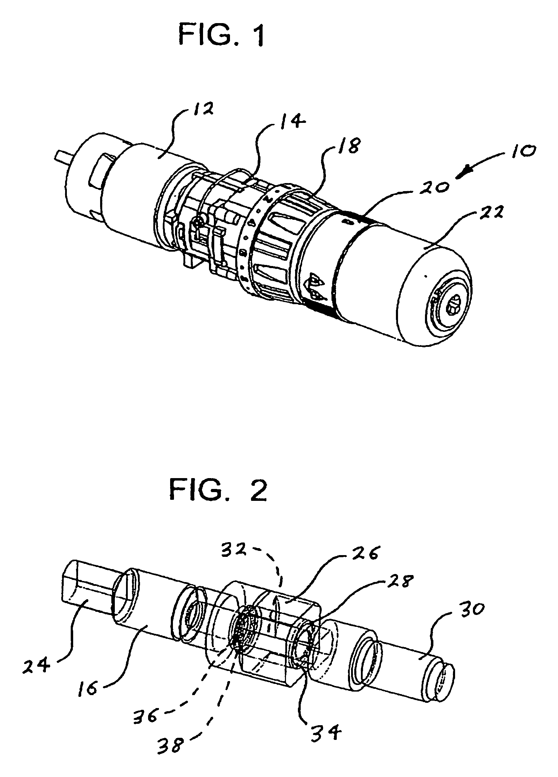

Referring now to the drawings, and particularly to Figures 1 through 24b, one embodiment of an auto locking chuck 10 is shown. As shown in Fig. 1, the auto locking chuck 10 is operably connected to a power tool having a housing (not shown) enclosing an electric motor 12, a gearbox 14, and a gearbox drive shaft 16 (see Fig. 2). In the particular embodiment illustrated, the gearbox 14 is a two-speed gearbox that may be switched between low-speed and high-speed settings. The power tool may also include a clutch mechanism 18 for adjusting or limiting the output torque of the gearbox drive shaft 16. The details of the arrangement and individual components of the gearbox 14 and the clutch mechanism 18 are generally well known to those skilled in the art of power tools, and will therefore not be described herein. In any event, it should be understood that the specific arrangement and components of the power tool are generally not pertinent to the auto locking chuck 10 of the present invention. For example, the auto locking chuck 10 of the present invention may be utilized with a pneumatically driven tool.

As shown in Fig. 1, the auto locking chuck 10 comprises a mode selector 20 and a chuck shell 22. As will be described in greater detail below, the mode selector 20 allows the chuck 10 to be switched between drill mode and auto-lock mode. When in drill mode, rotation of the gearbox drive shaft 16 rotates the chuck body so as to rotate a tool bit inserted into the jaws of the chuck 10. When in auto-lock mode, rotation of the gearbox drive shaft 16 rotates the adjustment ring relative to the chuck body so as to tighten or loosen the jaws.

As shown in Fig. 2, the gearbox shaft 16 comprises a rearward portion 24 having a "D-shaped" cross-section configured to mate with and be coupled to the gearbox output (not shown), so as to permit the gearbox shaft 16 to be rotationally driven by the gearbox 14. The forward portion 26 of the gearbox shaft 16 comprises a rectangular cross-section that is configured to mate with and rotationally drive an impact member (described below). The forward portion 26 also comprises a recess 28 into which the output shaft 30 of the chuck 10 is disposed.

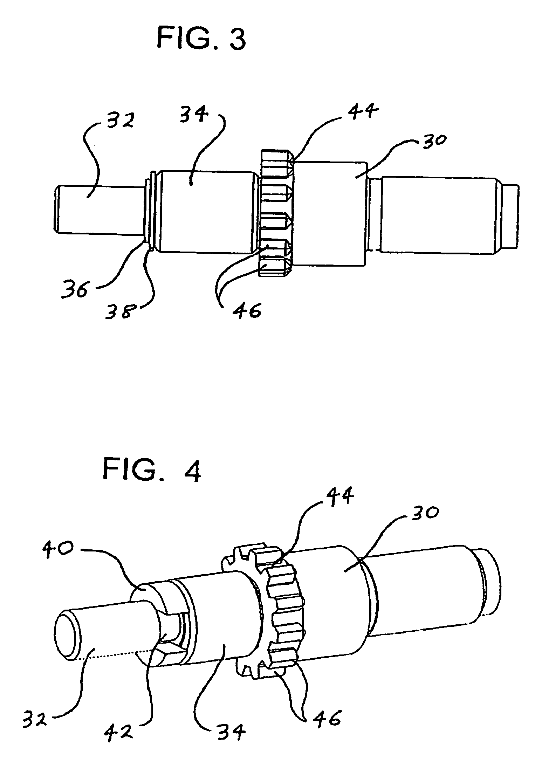

One embodiment of the output shaft 30 is illustrated in Figs. 2-3. As best seen in fig. 2, the output shaft 30 comprises a rearward portion 32 that is configured to engage the recess 28 of the gearbox shaft 16. In particular, a bushing 34 is press-fit into the recess 28 so as to be rotationally and axially affixed thereto. As best seen in Fig. 3, the bushing 34 is coupled to the rearward portion 32 of the output shaft 30, and is secured thereto with a retaining ring 36 and washer 38 so as to be rotatable relative thereto. The retaining ring 36 fits into a groove in the outer surface of the rearward portion 32 of the output shaft 30. In an alternative embodiment shown in Fig. 4, the bushing 34 is secured to the output shaft 30 by a "C-shaped" retaining block 40 that fits into the groove 42 in the output shaft 30. The above-describe arrangement allows the output shaft 30 to rotate independently of the gearbox shaft 16.

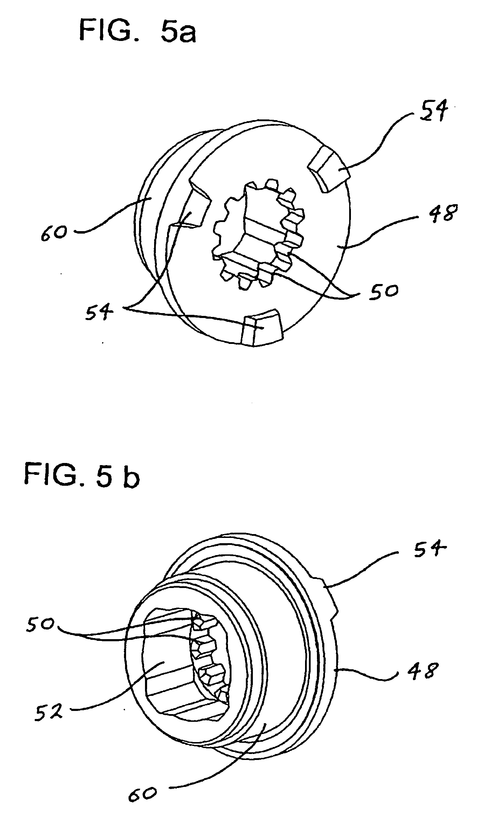

As best seen in Fig. 2, the output shaft 30 comprises a "D-shaped" cross-section adjacent to (forward of) the bushing 34. This "D-shaped" cross-section is configured to be rotationally coupled with (i.e., rotationally affixed to) a drive gear 44, which is shown in Figs. 3-4. More specifically, the drive gear 44 comprises a corresponding "D-shaped" cross-sectional opening that mates with the "D-shaped" cross-sectional portion of the output shaft 30. The drive gear 44 is axially secured to the output shaft 30 by the bushing 34. As will be explained below, the drive gear 44 is configured to be selectively rotationally coupled with an impact member 48 (see Figs. 5a-5b), which in turn is rotationally coupled to the gearbox shaft 16, so as to allow the gearbox shaft 16 to rotationally drive the output shaft 30 when the chuck 10 is in drill mode.

The impact member 48 is illustrated in Figs. 5a-5b. The forward portion of the impact member 48 comprises inwardly projecting gear-shaped teeth 50 that are configured to engage outwardly projecting gear-shaped teeth 46 on the drive gear 44 (see Figs. 3-4). The rearward portion of the impact member 48 comprises a rearward recess 52 having a generally rectangular cross-section that is configured to be rotationally coupled with the rectangular shaped forward portion 26 of the gearbox shaft 16 (see Fig. 2). The impact member 48 is axially movable relative to gearbox shaft 16. Nevertheless, the impact member 48 is always rotationally coupled or affixed to the gearbox shaft 16. As will be explained below, rearward recess 52 has a minimal interior diameter that is greater than the maximum outer diameter of the teeth 46 of the drive gear 44 to allow the rearward recess 52 to be disposed about the drive gear 44 without causing any interference therebetween.

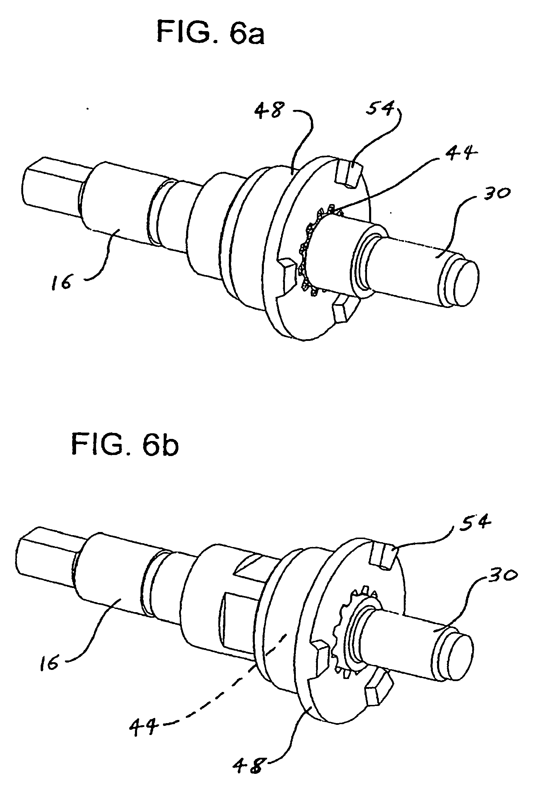

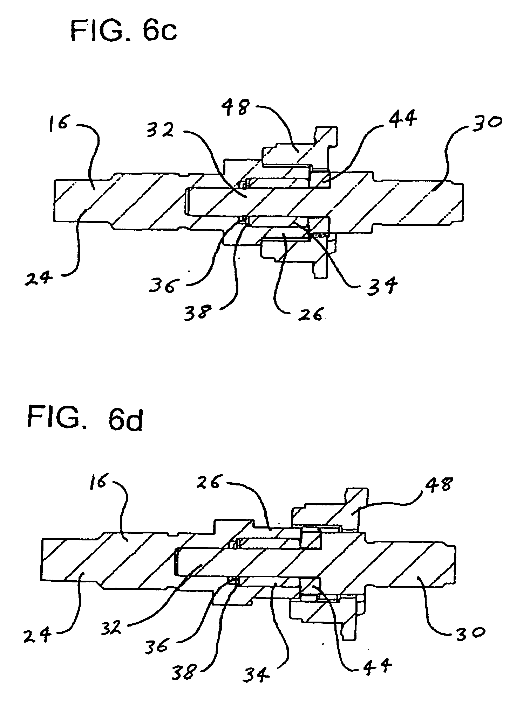

As illustrated in Figs. 6a-6d, the impact member 48 is axially movable relative to the gearbox shaft 16 and the output shaft 30. Figs. 6a and 6c (which is a sectional view of Fig. 6a) illustrate the impact member 48 in the rearward (proximal) position, wherein the teeth 50 of the impact member 48 are engaged with the teeth 46 of the drive gear 44. As a result, the output shaft 30 is rotationally coupled or affixed to the gearbox shaft 16, thereby allowing the output shaft 30 to be rotationally driven by the gearbox shaft 16. The impact member 48 is in the rearward position when the chuck 10 is in drill mode.

Figs. 6b and 6d (which is a sectional view of Fig. 6b) illustrate the impact member 48 in the forward (distal) position, wherein the teeth 50 of the impact member 48 are not engaged with the teeth 46 of the drive gear 44. In particular, the teeth 50 of the impact member 48 are disposed distally of the drive gear 44, the drive gear 44 being disposed within the rearward recess 52 of the impact member 48. As a result, the output shaft 30 is rotationally uncoupled from (rotatable relevant to) the gearbox shaft 16, thereby allowing the output shaft 30 to rotate independently of the gearbox shaft 16. The impact member 48 is in the forward position when the chuck 10 is in auto-chuck mode.

The impact member 48 further comprises a plurality of chamfered impact blocks 54 projecting from the forward face thereof. As will be explained in greater detail below, the chamfered impact blocks 54 are configured to engage similar structures on the impact plate when the chuck 10 is in auto-lock mode.

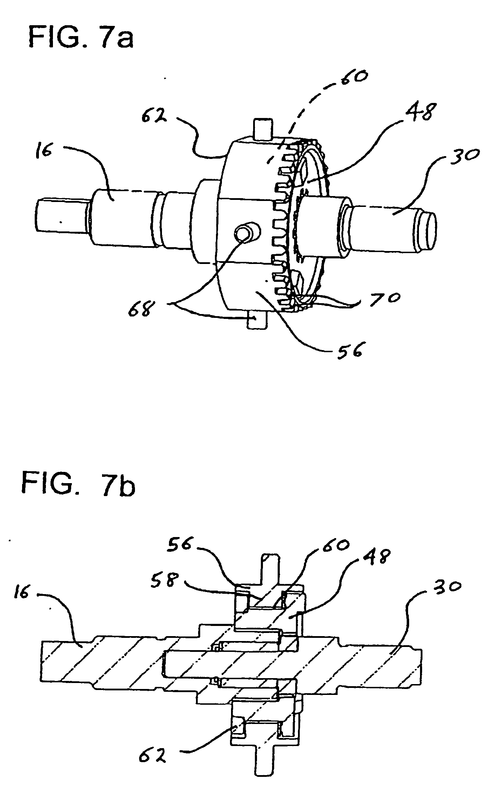

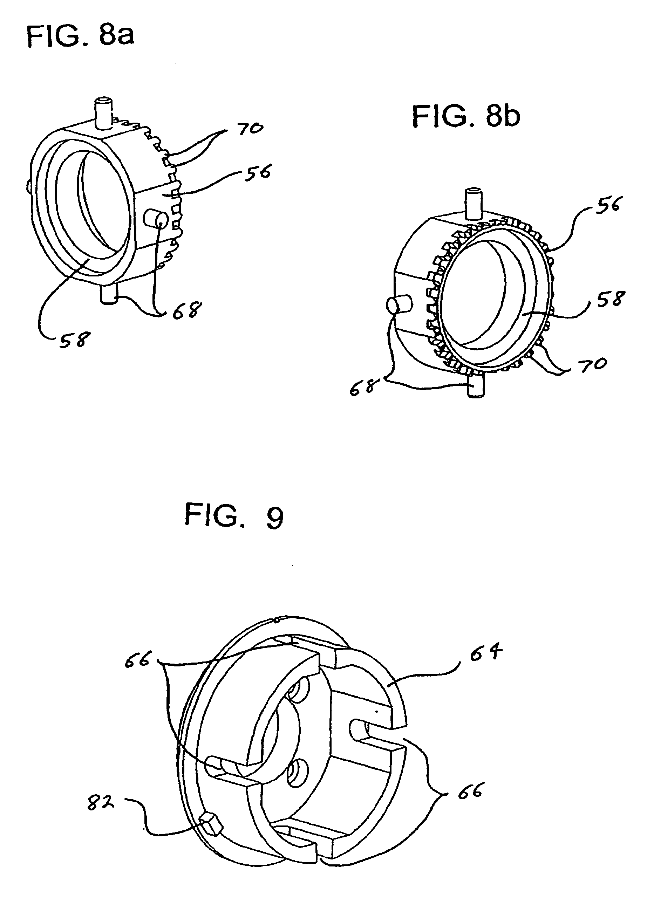

As shown in Figs. 7a-7b, the axial position of the impact member 48 is controlled by a shift block 56. The shift block 56 is illustrated in detail in Figs. 8a-8b. The shift block 56 is rotationally disposed about the impact member 48 and comprises an inwardly projecting flange 58 that slidably mates with a reduced cross-sectional area 60 of the impact member 48. The shift block 56 is axially secured to the impact member 48 by a washer 62 that is press-fit or otherwise affixed to the rearward portion of the impact member 48. Thus, axial movement of the shift block 56 results if axial movement of the impact member 48. However, the impact member 48 is allowed to rotate relative to the shift block 56.

The shift block 56 is rotationally coupled or affixed to a housing of the power tool so as to prevent relative rotation between the shift block 56 and the power tool. In the particular embodiment illustrated, the shift block 56 is rotationally coupled to the power tool by a spring plate holder 64, which is illustrated in Fig. 9. The spring plate holder 64 is affixed to the housing of the gearbox 14 (see Fig. 1) by screws or some other type of mechanical fastener. The spring plate holder 64 may also be welded to or formed from a portion of the gearbox 14 housing. Alternatively, the spring plate holder 64 may be affixed to the power tool housing or some other stationary component of the power tool.

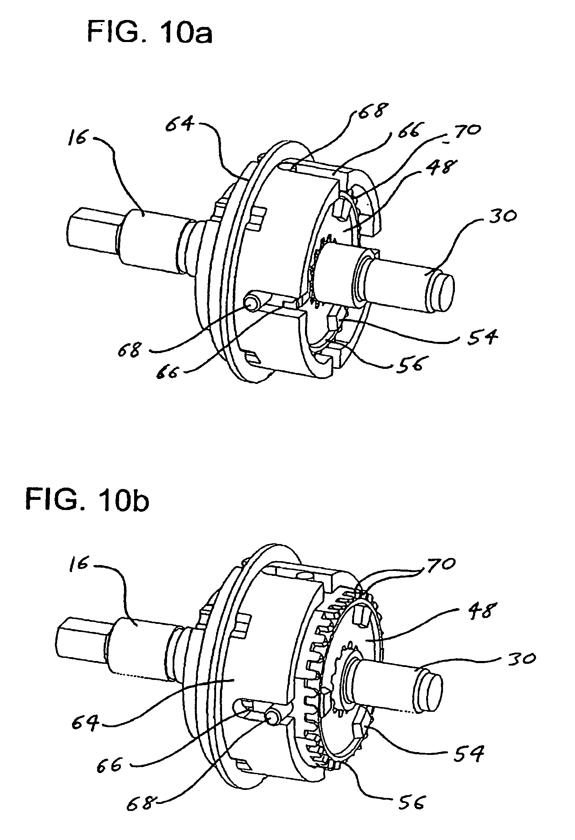

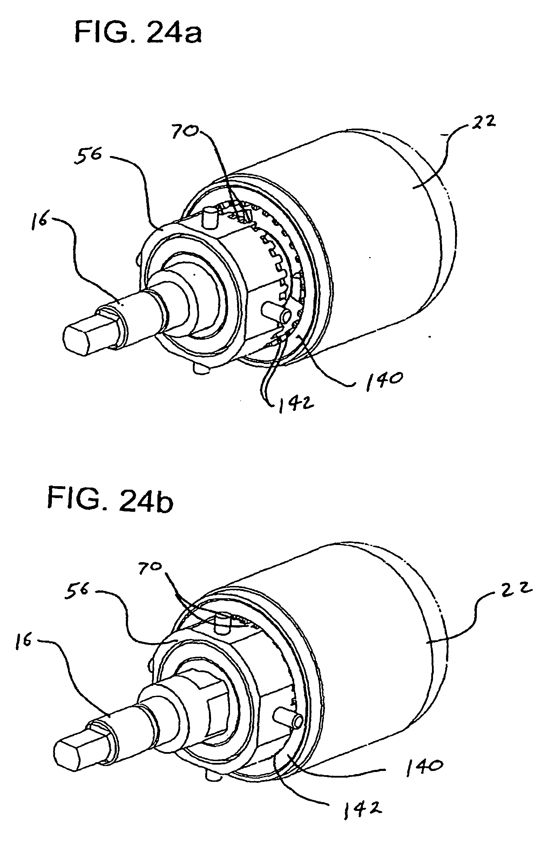

As best seen in Figs. 10a-10b, the shift block 56 is generally disposed within the spring plate holder 64 and is axially movable relative thereto. The spring plate holder 64 comprises longitudinal slots 66 that are configured to slidably receive outwardly projecting posts 68 disposed on the outer surface of the shift block (see also Figs. 8a-8b). The engagement between the slots 66 and posts 68 prevent the shift block 56 from rotating relative to the spring plate holder 64 without inhibiting relative axial movement therebetween. Fig. 10a shows the position of the shift block 56 and impact member 48 when the chuck 10 is in drill mode. Fig. 10b shows the position of the shift block 56 and impact member 48 when the chuck 10 is in auto lock mode. As will be explained in greater detail below, the shift block 56 comprises teeth 70 disposed about the periphery of the forward portion thereof that are configured to engage corresponding structures on the chuck shell 22 (see Fig. 24b) when the chuck 10 is in auto-lock mode so as to secure the chuck shell 22 against rotation relative to the power tool.

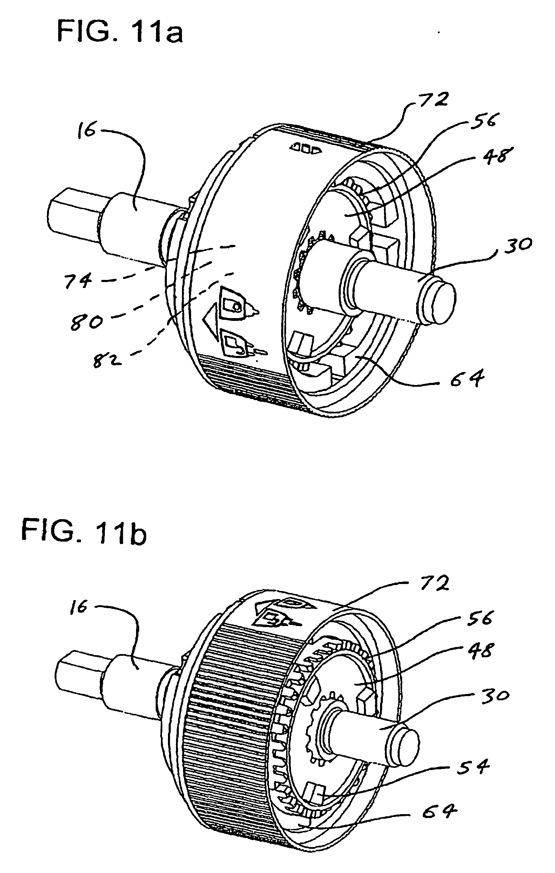

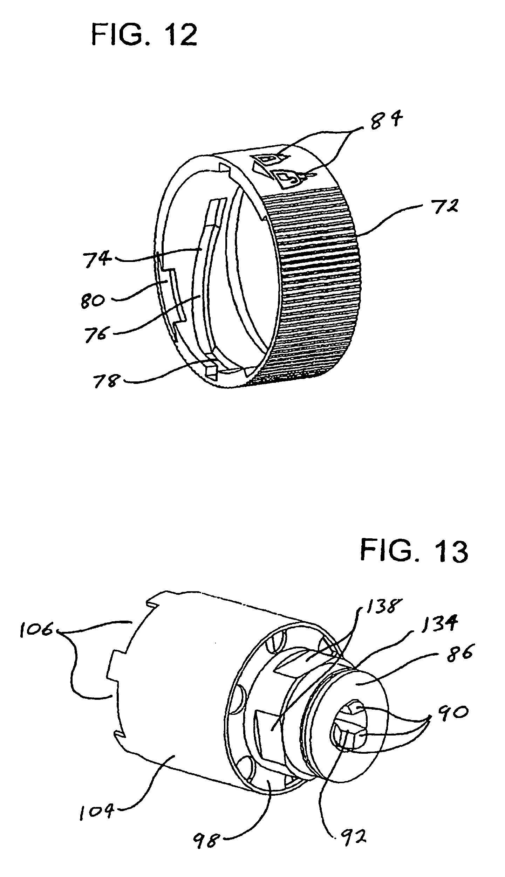

The axial position of the shift block 56, and consequently the axial position of the impact member 48, is controlled by the mode selector 20 (see Fig. 1). As best seen in Figs. 11a-11b, the mode selector 20 comprises a mode sleeve 72 that is disposed about and rotatable relevant to the spring plate holder 64. Rearward (proximal) axial movement of the mode sleeve 72 is prevented by a flange on the spring plate holder 64, and forward (distal) axial movement of the mode sleeve 72 is prevented by the chuck shell 22. As best seen in Fig. 12, the inside surface of the mode sleeve 72 comprises a pair of slots or grooves 74 that are engaged by two of the posts 68 affixed to the shift block 56. The grooves 74 each comprise a central portion 76 that is helically disposed about the inside surface of the mode sleeve 72. The central portions 76 are configured so as to engage the posts 68 and move the shift block 56 in an axial direction upon rotation of the mode sleeve 72. For example, rotation of the mode sleeve 72 in a clockwise direction causes the shift block 56 and impact member 48 to move in a forward direction (and into auto-lock mode), as shown in Fig. 11b, whereas rotation of the mode sleeve 72 in a counterclockwise direction causes the shift block 56 and impact member 48 to move in a rearward direction (and into drill mode), as shown in Fig. 11 a. Each end of the grooves 74 may also comprise an end portion 78 that is disposed generally perpendicular to the longitudinal axis of the chuck 10. The end portions 78 are configured to prevent any forces that may transmitted to the mode sleeve 72 by the posts 68 during operation of the power tool from inadvertently rotating he mode sleeve 72.

The mode sleeve 72 may further comprise one or more secondary grooves 80 that are engaged by stoppers 82 on the spring plate holder 64. The secondary grooves 80 and stoppers limit the amount of rotation of the mode sleeve 72 relative to the spring plate holder 64. Indicia 84 may be provided on the exterior surface of the mode sleeve 72, as well as on the power tool housing, to indicate the rotational position of the mode sleeve 72, i.e., drill mode or auto-lock mode. The exterior surface of the mode sleeve 72 may also be knurled, machined or otherwise coated to improve gripping thereof.

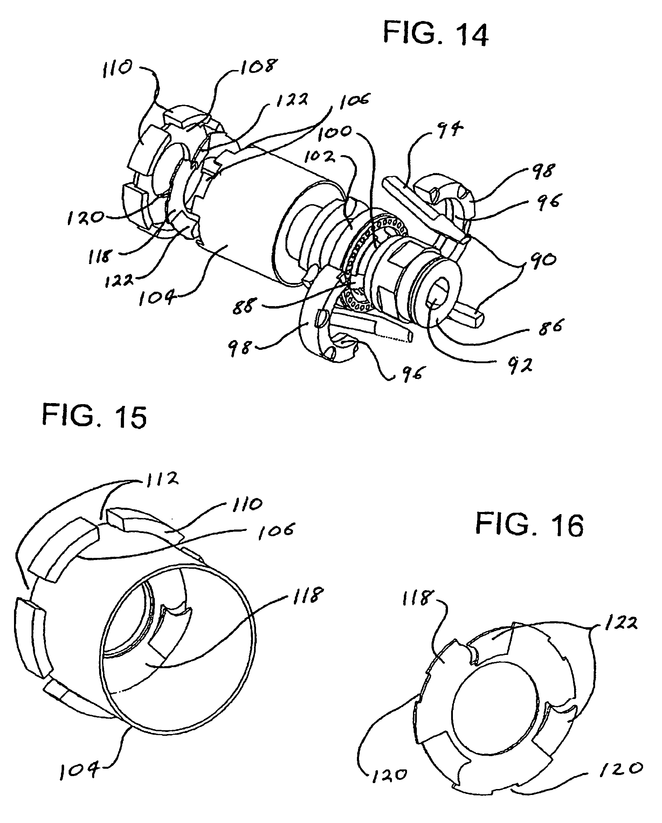

A transmission block, also referred to as a chuck body 86, is fixedly attached to the forward portion of the output shaft 30, preferably by a threaded connection therebetween (not shown). The chuck body 86 is best seen in Figs. 13-14, wherein Fig. 14 is an exploded illustration of the chuck body 86 and certain other components shown in Fig. 13. In particular, the chuck body 86 comprises a plurality (e.g., three) angularly disposed passageways 88 through which jaws 90 are movably disposed. Movement of the jaws 90 in a forward direction causes the front ends of the jaws 90 to move together, whereas movement if the rearward direction causes the front ends of the jaws 90 to move apart from each other. The front ends of the jaws 90 are configured to engage a tool bit placed within central opening 92 of the chuck body 86. In addition, the front ends of the jaws 90 are preferably angled on the inside surfaces thereof so as to allow the jaws 90 to be brought into close contact with each other.

Threads 94 are formed on the outside surfaces of the rear portions of each of the jaws 90. These threads 94 are engaged by corresponding threads 96 on the inside surface of an adjustment ring, commonly referred to as a nut 98. In the particular embodiment illustrated, the nut 98 comprises a split nut formed from two halves that are disposed in a channel 100 in the outer surface of the chuck body 86. The channel 100 maintains the axial position of the nut 98 relative to the chuck body 86. Rotation of the nut 98 relative to the chuck body 86 causes the jaws 90 to move in an axial direction, i.e., to open or close. A bearing structure 102 may be provided between one or more surfaces of the nut 98 and the chuck body 86 to facilitate rotational movement therebetween.

The two halves of the nut 98 are held together by a nut sleeve 104, which is press fit or otherwise affixed to the outer surface of the nut 98. Thus, rotation of the nut sleeve 104 results in rotation of the nut 98. The rear portion of the nut sleeve 104 comprises slots 106 that are engaged by a guide plate 108. In particular, and as best seen in Fig. 15, the guide plate 108 comprises a plurality of tabs 110 that project outwardly through the slots 106 of the nut sleeve 104. As will be explained in greater detail below, these tabs 110 form secondary slots 112 therebetween that are configured to slidably engage the legs 116 of an impact plate 114. In other words, the tabs 110 of the guide plate 108 are configured to transfer rotational force or torque between the impact plate 114 and the nut sleeve 104 while permitting axial movement therebetween.

As shown in Fig. 15, an anti-lock open plate 118 is disposed between the nut sleeve 104 and the guide plate 108. The anti-lock open plate 118 is more fully illustrated in Fig. 16. The anti-lock open plate 118 includes a plurality of slots 120 disposed about the periphery thereof that are configured to engage the tabs 110 of the guide plate 108. The anti-lock open plate 118 further comprises a plurality of spring elements or levers 122 that project into the interior of the nut sleeve 104. These levers 122 are aligned with the angular passageways 88 of the chuck body 86, and are configured to be engaged by the rearward ends of the jaws 90 when the jaws are in the rearward most position to prevent further rotation of the nut 98. In other words, the anti-lock open plate 118 is configured to prevent the jaws 90 and the nut 98 from becoming jammed, which may occur when an excessive opening force is applied to the jaws 90.

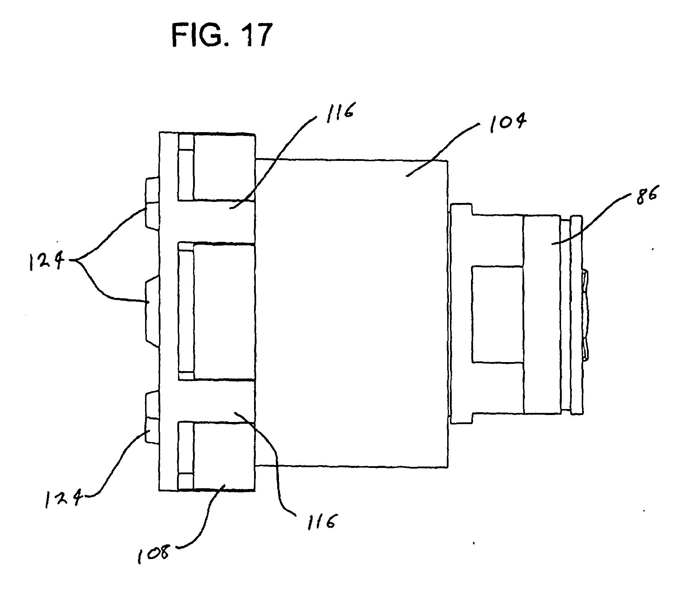

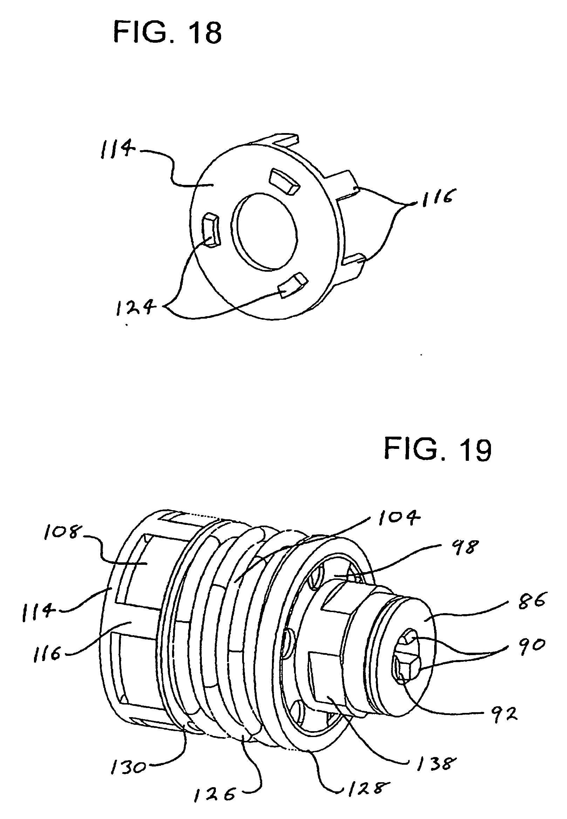

As shown in Fig. 17, an impact plate 114 is rotationally coupled or affixed to the nut sleeve 104 via guide plate 108. In particular, the impact plate 114 comprises a plurality of forwardly projecting legs 116 that are configured to be slidably disposed within the secondary slots 112 of the guide plate 108. Thus, rotation of the impact plate 114 causes rotation of the nut sleeve 104, and consequently the nut 98. Additional details of the impact plate 114 are shown in Fig. 18. The impact plate 114 further comprises a plurality of chamfered impact blocks 124 projecting from the rear surface thereof. As will be explained in greater detail below, the chamfered impact blocks 124 are configured to engage the chamfered impact blocks 54 on the impact member 48 (see Figs. 5a-6b) when the chuck 10 is in auto-lock mode. The impact blocks 124 of the impact plate 114 do not engage the impact blocks 54 of the impact member 48 when the chuck 10 is in drill mode.

As best seen in Fig. 19, a biasing spring 126 is disposed about the nut sleeve 104. The biasing spring 126 is configured to bias the impact plate 114 in a rearward direction and into engagement with the impact member 48 when the chuck 10 is in auto-lock mode. The biasing spring 126 is retained at its forward end by a spring seat 128 that is press fit or otherwise affixed to the forward end of the nut sleeve 104. A washer 130 is provided to transfer and distribute the biasing force of the biasing spring 126 to the legs 116 of the impact plate 114.

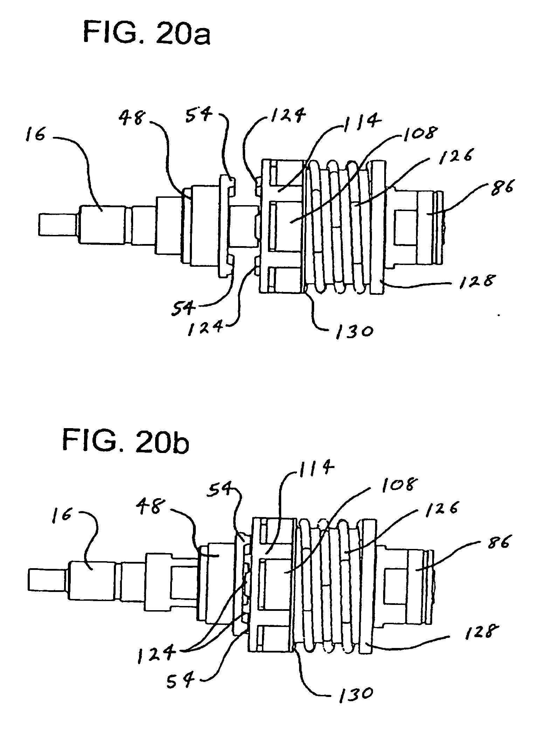

As shown in Fig. 20a, when the chuck 10 is placed in drill mode, the impact member 48 is spaced away (disengaged) from the impact plate 114. Thus, rotational movement of the impact member 48 is not transmitted to the impact plate 114. In other words, the rotation of the impact member 48 and the impact plate 114 are independent from each other. However, and as shown in Fig. 20b, when the chuck 10 is placed in auto-lock mode, the impact member 48 is brought into engagement with the impact plate 114. This allows rotational movement of the impact member 48 to be transferred to the impact plate 114, via impact blocks 54, 124. And because the impact member 48 is rotationally coupled to the gearbox shaft 16, and further because the impact plate 114 is rotationally coupled to the nut 98 (via guide plate 108 and nut sleeve 104), rotation of the gearbox shaft 16 results in rotation of the nut 98, thereby allowing the motor 12 of the power tool to open or close the jaws 90.

The side or contact faces of the impact blocks 54, 124 are preferably angled relative to the rotational axis of the impact member 48 and impact plate 114. The angled faces, in combination with the biasing spring 126, allow the impact blocks 54, 124 to slip past each other when the predetermined rotational force is transmitted between the impact member 48 and the impact plate 114, thereby allowing the impact member 48 to rotate relative to the impact plate 114. This prevents the nut 98 and jaws 90 from being over tightened by the motor 12 of the power tool during auto-lock mode. For example, and as illustrated in Fig. 20b, as the jaws 90 are tightened onto a tool bit, a rotational resisting force is generated between the jaws 90 and the nut 98. This rotational resisting force is then transmitted from the nut 98 to the impact plate 114, which is prevented from further rotation. As the gearbox shaft 16 continues to rotationally drive the impact member 48, the impact plate 114 is pushed forward against the biasing force of the biasing spring 126, thereby allowing the angled contact surfaces between the impact blocks 54, 124 to slip past each other. The amount of rotational force that can be transmitted between the impact member 48 and the impact plate 114 is determined by several factors, including the stiffness (i.e., spring constant) of the biasing spring 126, the angle of the contact surfaces of the impact blocks 54, 124, the number of impact blocks 54, 124, and the frictional contact between the various components. In the particular embodiment illustrated, the impact blocks 54, 124 are also configured to engage each other and disengage from each other in a similar fashion during loosening of the jaws 90 to prevent the jaws 90 from becoming jammed in the open position.

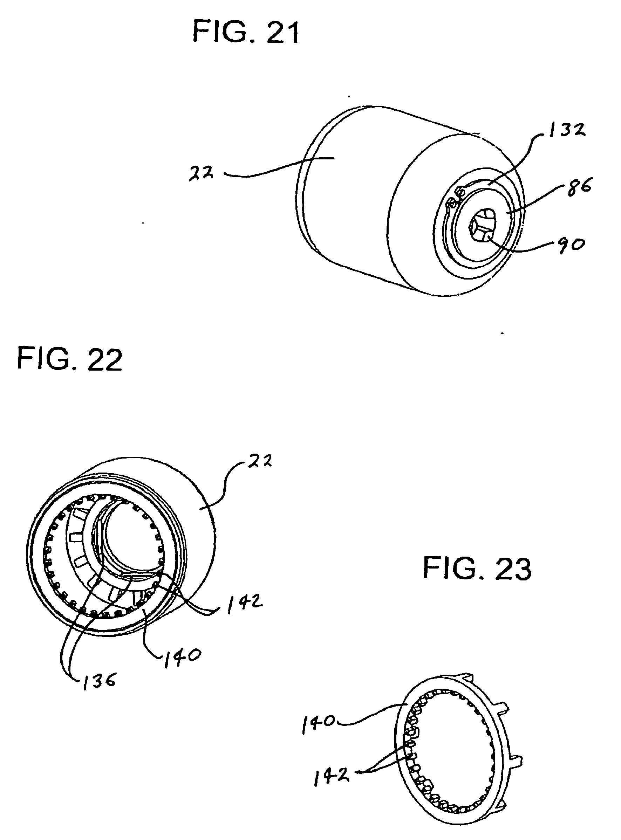

The chuck body 86, nut sleeve 104, impact plate 114 and related components are rotationally disposed with the chuck shell 22. As best seen in Fig. 21, the chuck shell 22 is held onto the chuck body 86 by a retaining ring 132 that fits into a circumferential groove 134 in the forward portion of the chuck body 86 (see Fig. 13). As best seen in Fig. 22, the forward inside surface of the chuck shell 22 comprises a plurality of flat surfaces 136 that are configured to engage a plurality of flat surfaces 138 on the forward portion of the chuck body 86 (see Fig. 13). These flat surfaces 136, 138 rotationally secured the chuck shell 22 to the chuck body 86. A lock plate 140 is affixed to the rearward portion of the chuck shell 22. The lock plate 140, which is shown separately in Fig. 23, comprises a plurality of teeth 142 that are configured to selectively engage teeth 70 on the shift block 56 (see Figs. 7-8b) when the chuck is in auto-lock mode.

The engagement of the teeth 142 of the chuck shell 22 by the teeth 70 of the shift block 56 prevents rotation of the chuck shell 22 relative to the power tool during auto-lock mode. In particular, and as shown in Fig. 24b, when the chuck 10 is placed in auto-lock mode, the shift bock 56 is advanced in a forward direction so as to engage the lock plate 140 of the chuck shell 22. Because the shift block 56 is prevented from rotating relative to the power tool, and because the chuck shell 22 is rotationally coupled or secured to the chuck body 86, the chuck body 86 is likewise prevented from rotating relative to the power tool during auto-lock mode. As a consequence, the chuck body 86 is held stationary as the nut 98 is rotationally driven by the gearbox shaft 16 to open or close the jaws 90. As shown in Fig. 24a, the shift block 56 is disengaged from the chuck shell 22 when in drill mode. Thus, the chuck body 86 is free to be rotationally driven by the gearbox shaft 16.

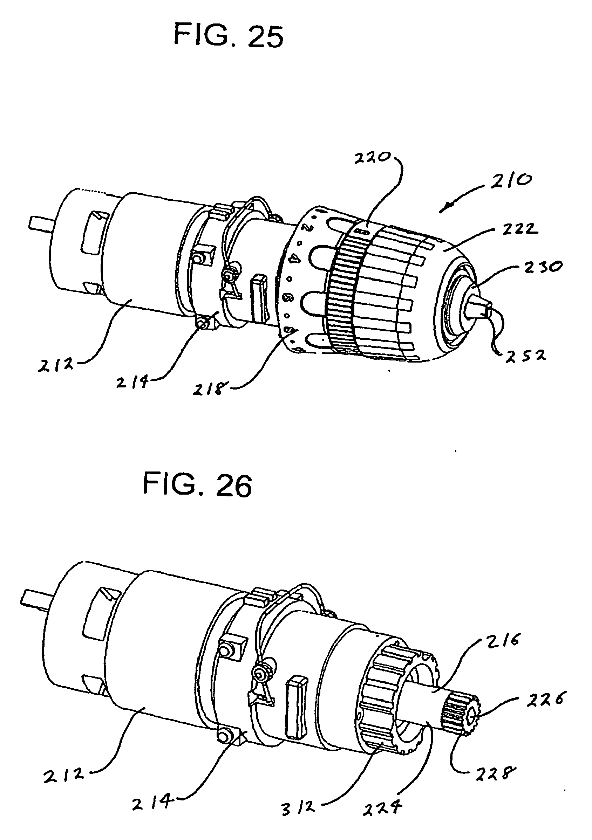

A second embodiment of the auto locking chuck 210 is shown in Figures 25-47. Similar to the first embodiment described above, and as shown in Fig. 25, the auto locking chuck 210 is operably connected to a power tool having a housing (not shown) enclosing an electric motor 212, a gearbox 214, and a gearbox drive shaft 216 (see Fig. 26). In the particular embodiment illustrated, the gearbox 214 is a two-speed gearbox that may be switched between low-speed and high-speed settings. The power tool may also include a clutch mechanism 218 for adjusting or limiting the output torque of the gearbox drive shaft 216. The details of the arrangement and individual components of the gearbox 214 and the clutch mechanism 218 are generally well known to those skilled in the art of power tools, and will therefore not be described herein.

As shown in Fig. 25, the auto locking chuck 210 comprises a mode selector 220 and a chuck shell 222. As will be described in greater detail below, the mode selector 220 allows the chuck 210 to be switched between drill mode and auto-lock mode. When in drill mode, rotation of the gearbox drive shaft 216 rotates the chuck body so as to rotate a tool bit inserted into the jaws of the chuck 210. When in auto-lock mode, rotation of the gearbox drive shaft 216 rotates the adjustment ring relative to the chuck body so as to tighten or loosen the jaws.

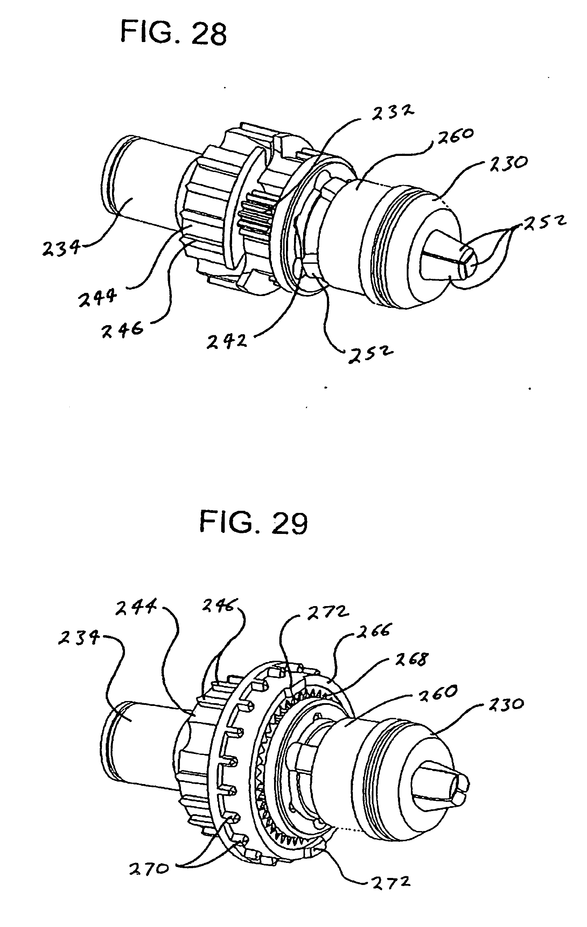

As shown in Fig. 26, the gearbox shaft 216 of the power tool comprises a shaft portion 224 that is operably coupled to the gearbox 214 and is rotationally driven thereby. The forward (distal) end 226 of the gearbox shaft 216 comprises a sun gear 228 affixed thereto. In the particular embodiment illustrated, the sun gear 228 comprises a central opening having a non-circular cross-section that corresponds to the cross-sectional shape of the forward end 226 of the gearbox shaft 216 so as to prevent relative rotation therebetween. However, other structures and methods may be employed to secure the sun gear 228 to the gearbox shaft 216. As will be explained in greater detail below, the sun gear 228 is configured to engage a set of planet gears 232 on the chuck body 230 (see Fig. 28).

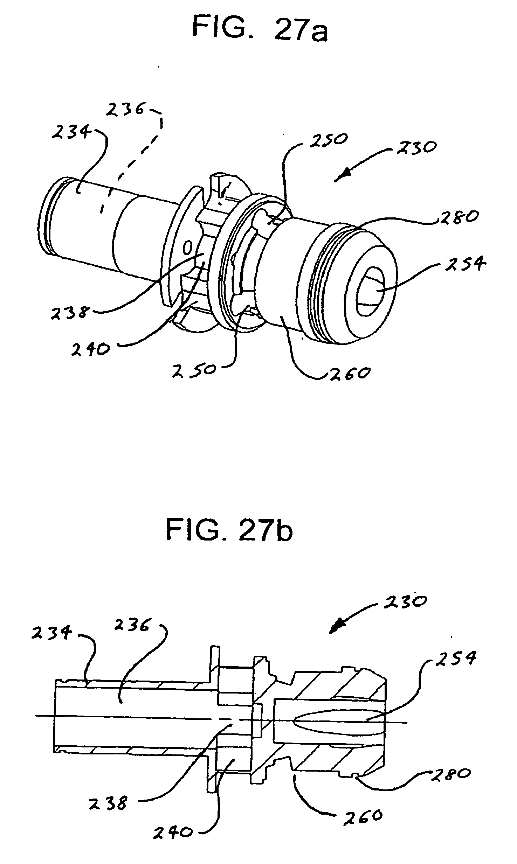

A transmission block, also referred to as a chuck body 230, is rotationally disposed over the gearbox shaft 216. The chuck body 230 is best seen in Figs. 27a-28, wherein Figs. 27a-27b illustrate only the chuck body 230 and Fig. 28 illustrates the chuck body 230 with certain components operably coupled thereto. In particular, the chuck body 230 comprises a rearwardly (proximally) extending shaft portion 234 having a central passageway 236 that is configured to receive the shaft portion 224 of the gearbox shaft 216. The chuck body 230 is rotatable relative to the gearbox shaft 216.

As best seen in Figs. 27a-27b, the forward end of the central passageway 236 includes a sun gear recess 238 in which the sun gear 228 is disposed. A plurality (typically three) of planet gear recesses 240 are disposed about the sun gear recess 238 and are in fluid communication therewith. As best seen in Fig. 28, a plurality (typically three) of planet gears 232 are disposed in these recesses 240 so as to engage and mesh with the sun gear 228. The planet gears 232 are rotatably attached to the chuck body 230 by axles or pins 242 that allow the planet gears 232 to rotate within the recesses 240.

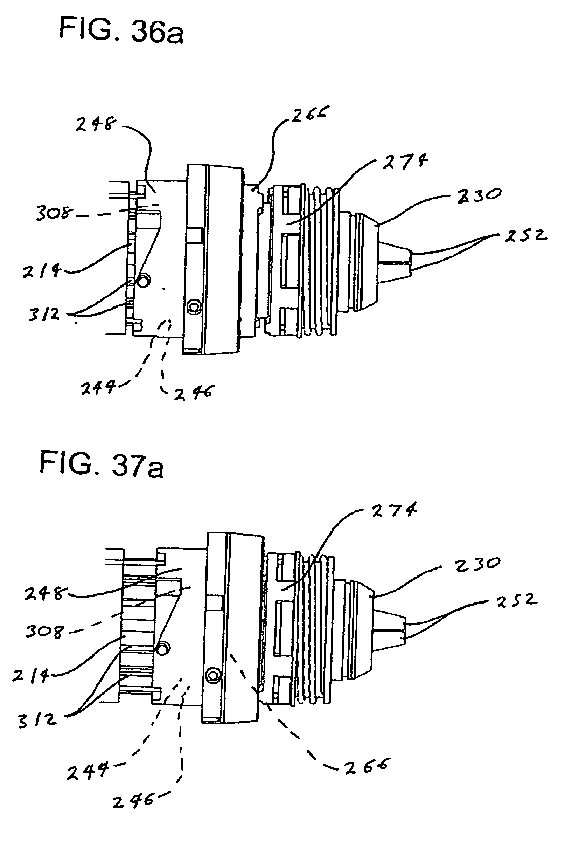

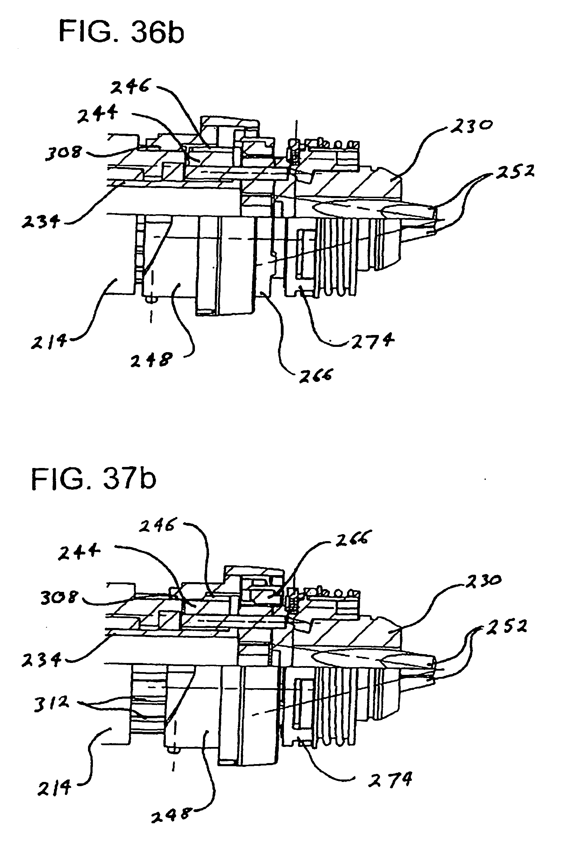

Fig. 28 also illustrates a lock part 244 that is disposed about the shaft portion 234 of the chuck body 230 and is affixed thereto. The lock part 244 is rotationally affixed to the chuck body 230 so that these components will rotate together. The lock part 244 includes a plurality of longitudinally oriented ribs 246 disposed about the periphery thereof. As will be explained in greater detail below, the lock part 244 is configured to be selectively engaged by a join member 248 (see Figs. 37a-37b) so as to permit the lock part 244, and consequently the chuck body 230, to be locked against rotation relative to the power tool when the chuck 210 is in auto-lock mode.

As illustrated in Fig. 29, an impact member 266 is rotatably disposed about the chuck body 230 adjacent to the planet gears 232. In particular, the impact member 266 comprises a ring gear having a plurality of teeth 268 disposed about the interior circumference thereof that engage or mesh with the teeth of the planet gears 232. The impact member 266, the planet gears 232, and the sun gear 228 form a planetary gear system that is configured to transfer rotational movement from the power tool to the chuck 210. In the particular embodiment illustrated, these components form a third layer planetary gear system because the gearbox 214 of the power tool includes first and second layer planetary gear systems.

The impact member 266 is axially movable relative to chuck body 230. In particular, the impact member 266 is axially movable between a forward position and a rearward position. As will be explained in greater detail below, the forward position causes the impact member 266 to engage an impact plate 274 that is rotationally coupled to the nut 258 (see Figs. 37a-37b), whereas the rearward position causes the impact member 266 to disengage from the impact plate 274 (see Figs. 36a-b). The impact member 266 is in the forward position when the chuck 210 is in auto-lock mode, and is in the rearward position when the chuck 210 is in drill mode. In either position, the teeth 268 of the impact member 266 always remain engaged with the planet gears 232.

The impact member 266 further comprises a plurality of ribs 270 disposed about the outer circumference thereof. As will be explained in greater detail below, these ribs 270 are configured to be selectively engaged by the join member 248 (see Figs. 36a-36b) so as to permit the impact member 266 to be locked against rotation relative to the power tool when the chuck 210 is in drill mode. When the impact member 266 is locked against rotation relative to the power tool, rotation of the sun gear 228 by the gearbox shaft 216 causes the planet gears 232 to orbit about the interior circumference of the impact member 266 to thereby rotate the chuck body 230, and consequently a tool bit disposed therein.

In contrast, when the chuck 210 is in auto-lock mode, the impact member 266 is allowed to rotate relative to the power tool while the chuck body 230 is secured by the join member 248 against rotation relative to the power tool. As a result, the rotation of the sun gear 228 by the gearbox shaft 216 causes the planet gears 232 to rotate on their pins 242, which causes to the impact member 266 to rotate relative to the chuck body 230. And because the impact member 266 is in the forward position and engaged with the impact plate 274 when the chuck 210 is in auto-lock mode (see Figs. 37a-37b), rotation of the impact member 266 rotates the impact plate 274, and consequently the nut 258, to either tighten or loosen the jaws 252 of the chuck 210.

The impact member 266 further comprises a plurality of chamfered impact blocks 272 projecting from the forward face thereof. As will be explained in greater detail below, the chamfered impact blocks 272 are configured to engage chamfered impact blocks 276 on the impact plate 274 when the chuck 10 is in auto-lock mode.

With reference to Figs. 27-28, the chuck body 230 comprises a plurality (e.g., three) angularly disposed passageways 250 through which jaws 252 are movably disposed. Movement of the jaws 252 in a forward direction causes the front ends of the jaws 252 to move together, whereas movement if the rearward direction causes the front ends of the jaws 252 to move apart from each other. The front ends of the jaws 252 are configured to engage a tool bit placed within central opening 254 of the chuck body 230. In addition, the front ends of the jaws 252 are preferably angled on the inside surfaces thereof so as to allow the jaws 252 to be brought into close contact with each other. In general, the arrangement and construction of the jaws 252 and the passageways 250 of the chuck body 230 are similar to that of the first embodiment described above.

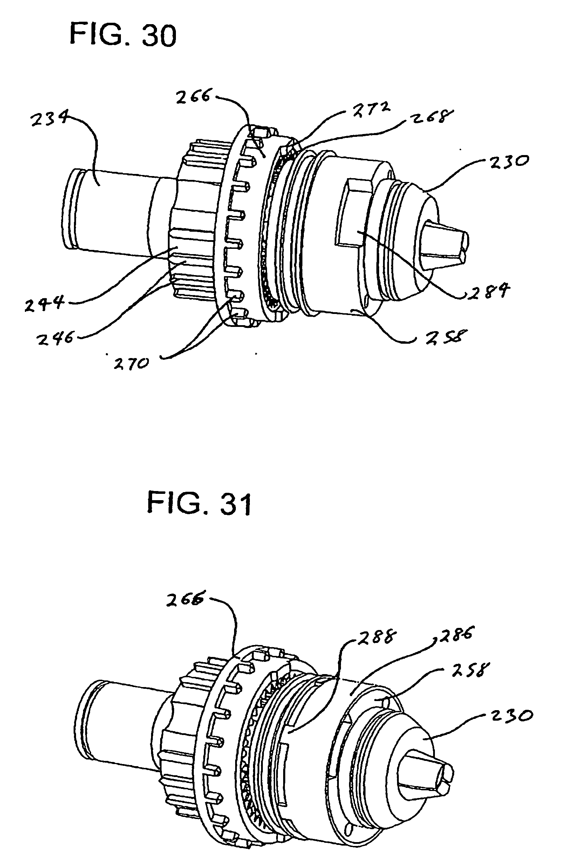

Threads 256 are formed on the outside surfaces of the rear portions of each of the jaws 252. These threads 256 are engaged by corresponding threads on the inside surface of an adjustment ring, commonly referred to as a nut 258. As best seen in Fig. 30, the nut 258 comprises a split nut formed from two halves that are disposed in a channel 260 in the outer surface of the chuck body 230 (see Figs. 27-28). The channel 260 maintains the axial position of the nut 258 relative to the chuck body 230. Rotation of the nut 258 relative to the chuck body 230 causes the jaws 252 to move in an axial direction, i.e., to open or close. A bearing structure 262 may be provided between one or more surfaces of the nut 258 and the chuck body 230 to facilitate rotational movement (i.e., reduce friction) therebetween. In the particular embodiment illustrated, a bearing structure 262 is disposed between the rearward face of the nut 258 and a washer 264 that sits on the chuck body 230. The bearing structure 262 and washer 264 also prevent the nut 258 from moving axially rearward relative to the chuck body 230.

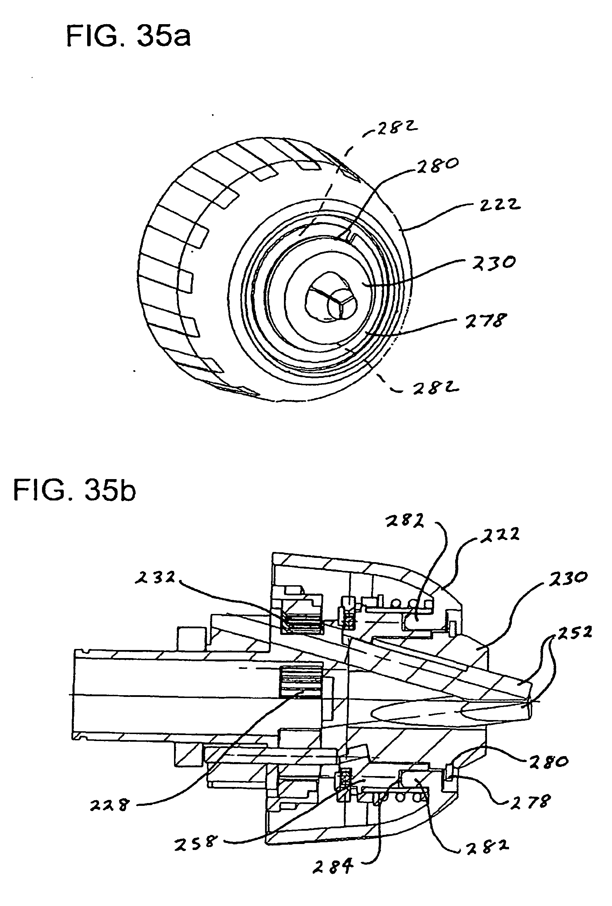

The nut 258 is axially retained on the chuck body 230 by a chuck shell 222 that is disposed over the forward portion of the chuck 210. As best seen in Fig. 25, the chuck shell 222 is axially secured to the chuck body 230 by a retaining ring 278 that snaps into a groove 280 in the forward portion of the chuck body (see Fig. 30). The chuck shell 222, which is shown in greater detail in Figs. 35a-35b, protects the user from the internal moving components of the chuck 210. In addition, the chuck shell 222 comprises one or more rearwardly projecting tabs 282 on the interior thereof that are configured to engage corresponding recesses 284 on the nut 258 (see Fig. 30). As a result, the chuck shell 222 is rotationally fixed to the nut 258. This allows manual rotation of the nut 258 to either tighten or loosen the jaws 252 of the chuck 210, which is accomplished by manually gripping and rotating the chuck shell 222. The exterior surface of the chuck shell 222 may be roughened, knurled or coated so as to improve gripping thereof.

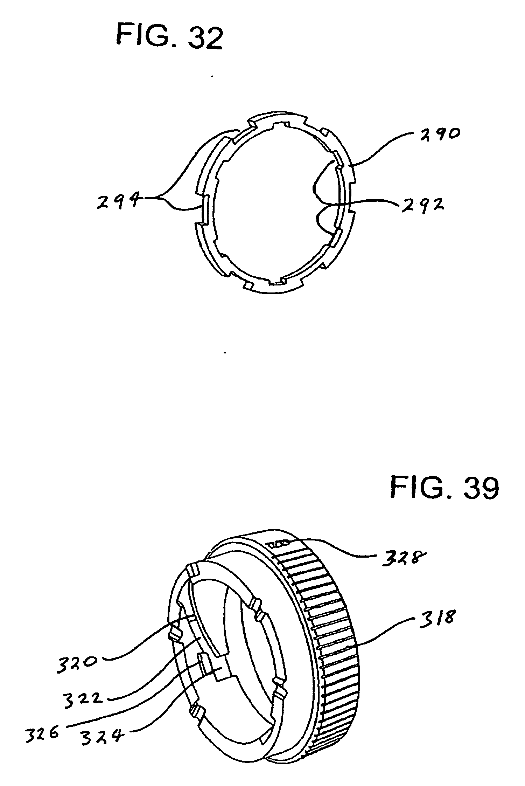

As illustrated in Fig. 31, the two halves of the nut 258 are held together by a nut sleeve 286, which is press fit or otherwise affixed to the outer surface of the nut 258. Thus, rotation of the nut sleeve 286 results in rotation of the nut 258. The rear portion of the nut sleeve 286 comprises legs 288 that engaged a guide plate 290. In particular, and as best seen in Fig. 32, the guide plate 290 comprises a plurality of interior recesses 292 along the interior circumference thereof that are configured to receive the legs 288 of the nut sleeve 286 therein. Accordingly, the guide plate 290 is rotationally coupled or affixed to the nut sleeve 286.

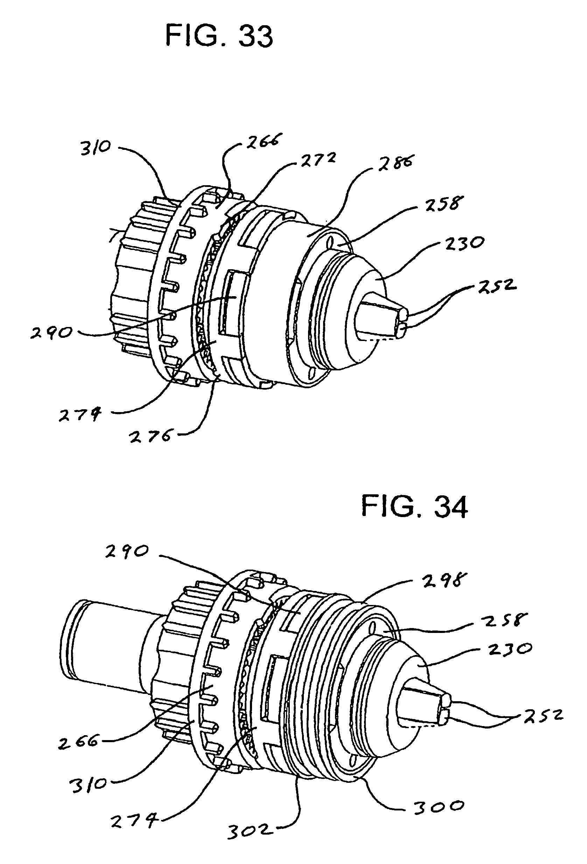

The guide plate 290 further comprises a plurality of exterior recesses 294 along the exterior circumference thereof that are configured to receive the legs 296 of the impact plate 274. Accordingly, and as shown in Fig. 33, the impact plate 274 is rotationally coupled to the nut sleeve 286 via guide plate 290. In particular, the impact plate 274 comprises a plurality of forwardly projecting legs 296 that are configured to be slidably disposed within the exterior recesses 294 of the guide plate 290. Thus, rotation of the impact plate 274 results in rotation of the nut sleeve 286, and consequently rotation of the nut 258. The impact plate 274 further comprises a plurality of chamfered impact blocks 276 projecting from the rear surface thereof. As will be explained in greater detail below, the chamfered impact blocks 276 are configured to engage the chamfered impact blocks 272 on the impact member 266 when the chuck 10 is in auto-lock mode (see Figs. 37a-37b). The impact blocks 276 of the impact plate 274 do not engage the impact blocks 272 of the impact member 266 when the chuck 10 is in drill mode (see Figs. 36a-36b).

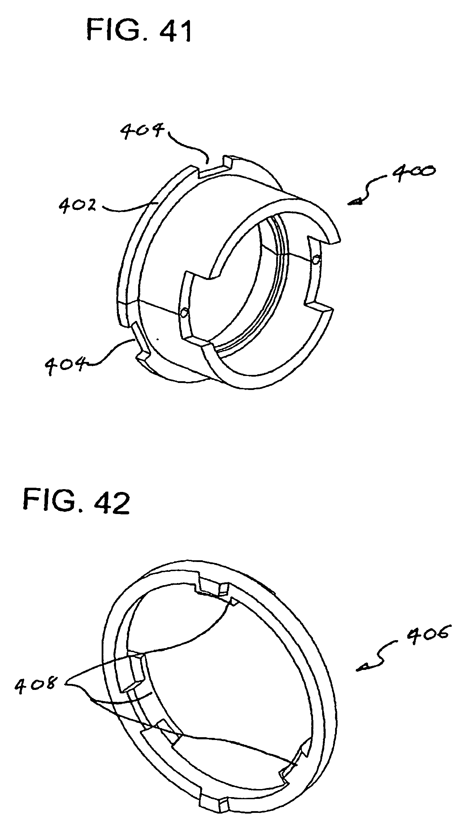

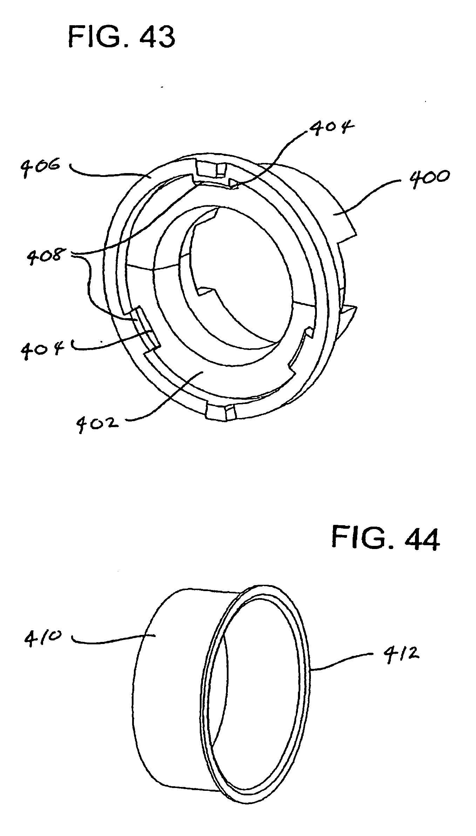

Figs. 41-43 illustrate an alternative construction for the nut 258, guide plate 290 and impact plate 274 described above. In particular, Fig. 41 shows a nut 400 having an outwardly projecting flange 402 having a plurality slots 404 disposed about the outer circumference thereof. Fig. 42 shows an impact plate 406 having a plurality inwardly and rearwardly projecting ribs 408 disposed about the inner circumference thereof. As best seen in Fig. 43, the ribs 408 are configured to engage the slots 404 so as to permit axial movement between the impact plate 406 and the nut 400, while preventing relative rotational movement therebetween. This alternative construction eliminates the need for the separate guide plate 290 shown in Figs. 32-33. Other aspects of the nut 400 and the impact plate 406 are the same as the embodiments described above in connection with Figs. 30-33.

As best seen in Fig. 34, a biasing spring 298 is disposed about the nut sleeve 286. The biasing spring 298 is configured to bias the impact plate 274 in a rearward direction and into engagement with the impact member 266 when the chuck 210 is in auto-lock mode. The biasing spring 298 is retained at its forward end by a spring seat 300 that is press fit or otherwise affixed to the forward end of the nut sleeve 286. A washer 302 is provided to transfer and distribute the biasing force of the biasing spring 298 to the legs 296 of the impact plate 274.

Fig. 44 illustrates an alternative construction for the above-described nut sleeve 286 that eliminates the need for a separate spring seat 300. In particular, Fig. 44 shows a nut sleeve 410 having an outwardly projecting flange 412 that is configured to engage and retain the forward end of the biasing spring 298.

As shown in Figs. 36a-36b, when the chuck 210 is placed in drill mode, the impact member 266 is spaced away (disengaged) from the impact plate 274. In addition, the impact member 266 is restrained against rotation by the join member 248 when in drill mode. The impact plate 274 is therefore free to rotate relative to the impact member 266. However, and as shown in Figs. 37a-37b, when the chuck 10 is placed in auto-lock mode, the impact member 266 is brought into engagement with the impact plate 274. This allows rotational movement of the impact member 266 to be transferred to the impact plate 274, via impact blocks 272, 276. And because the impact member 266 is rotationally driven by the gearbox shaft 216 when in auto-lock mode, and further because the impact plate 274 is rotationally coupled to the nut 258 (via guide plate 290 and nut sleeve 286), rotation of the gearbox shaft 216 results in rotation of the nut 258, thereby allowing the motor 212 of the power tool to open or close the jaws 252.

Similar to the first embodiment described above, the side or contact faces of the impact blocks 272, 276 are preferably angled relative to the rotational axis of the impact member 266 and impact plate 274. The angled faces, in combination with the biasing spring 298, allow the impact blocks 272, 276 to slip past each other when the predetermined rotational force is transmitted between the impact member 266 and the impact plate 274, thereby allowing the impact member 266 to rotate relative to the impact plate 274. This prevents the nut 258 and jaws 252 from being over tightened by the motor 212 of the power tool during auto-lock mode. The impact blocks 272, 276 are likewise also configured to engage each other and disengage from each other in a similar fashion during loosening of the jaws 252 to prevent the jaws 252 from becoming jammed in the open position.

As explained above, the impact member 266 is selectively locked against rotation, as well as axially moved, by the join member 248. The relationship between the impact member 266 and the join member 248 is illustrated in Figs. 36-37, wherein Figs. 36a-36b illustrate the position of these components when the chuck 210 is in drill mode and Figs. 37a-37b illustrate the position of these components when the chuck 210 is in auto-lock mode.

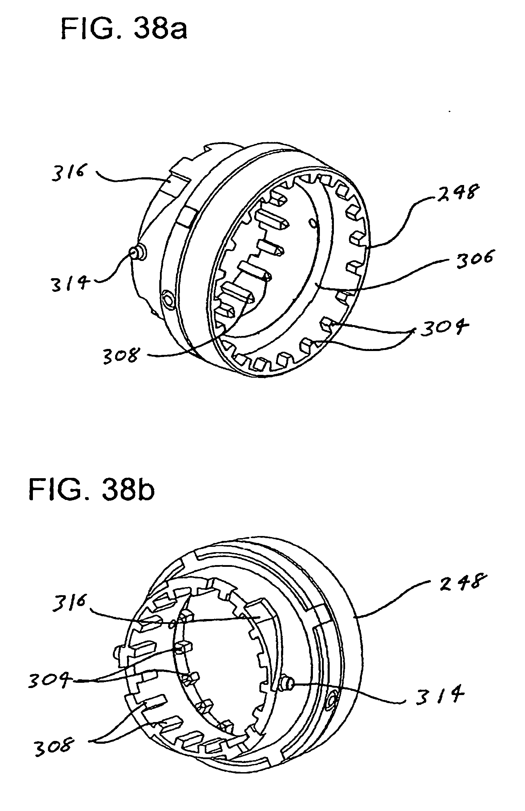

The join member 248 is more fully illustrated in Figs. 38a-38b. A forward set of ribs 304 is disposed about the interior circumference of the forward (distal) end of the join member 248. The forward ribs 304 are configured to selectively engage the ribs 270 disposed about the outer circumference of the impact member 266. A step 306 is provided along the interior surface of the join member 248 a short distance proximally of the forward ribs 304. As will be explained below, the step 306 is configured to engage the rearward flange 310 of the impact member 266. A rearward set of ribs 308 is disposed about the interior circumference of the rearward (proximal) end of the join member 248. The rearward ribs 308 are configured to engage a set of longitudinally disposed grooves 312 on the housing of the gearbox 214 (see Fig. 26). The rearward ribs 308 and grooves 312 prevent the join member 248 from rotating relative to the gearbox 214, and consequently prevents the join member 248 from rotating relative to the power tool. The rearward ribs 308 are also configured to selectively engage the ribs 246 on the lock part 244, which is fixedly connected to the chuck body 230 (see Fig. 28). As will be explained below, this arrangement allows the chuck body to selectively locked against rotation relative to the power tool.

The join member 248 further comprises an outwardly projecting boss 314 and a slope recess 316 on opposite sides thereof. As will be explained in greater detail below, the boss 314 and slope recess 316 are both configured to be engaged by the mode selector 220 so as to facilitate axial movement of the join member 248 by the mode selector 220.

As illustrated by Figs. 36-37, the join member 248 is axially movable between a rearward position when the chuck 210 is in drill mode (see Figs. 36a-36b), and a forward position when the chuck is in auto-lock mode (see Fig. 37a-37b). When in the rearward drill mode position (Figs. 36a-36b), the forward ribs 304 of the join member 248 engage the ribs 270 of the impact member 266. This causes the impact member 266 to be locked against rotation relative to the power tool. When the impact member 266 is locked against rotation relative to the power tool, rotation of the sun gear 228 by the gearbox shaft 216 causes the planet gears 232 to orbit about the interior circumference of the impact member 266 to thereby rotate the chuck body 230, and consequently a tool bit disposed therein. In addition, when the join member 248 is in the rearward drill mode position, the forward ribs 304 of the join member 248 engage the rearward flange 310 of the impact member 266, thereby moving the impact member 266 in a rearward direction and spaced away from the impact plate 274. This allows the impact plate 274, and consequently the nut 258, to freely rotate with the chuck body 230.

In contrast, when the join member 248 is in the forward auto-lock position (Figs. 37a-37b), the forward ribs 304 of the join member 248 are disengaged from the ribs 270 of the impact member 266. This allows the impact member 266 to rotate relative to the power tool. In addition, when the join member 248 is in the forward auto-lock position, the rearward ribs 308 are engaged with the ribs 246 on the lock part 244 of the chuck body 230. The chuck body 230 is consequently locked against rotation relative to the power tool. As a result, the rotation of the sun gear 228 by the gearbox shaft 216 causes the planet gears 232 to rotate on their pins 242, which in turn causes to the impact member 266 to rotate relative to the chuck body 230. In other words, the forward auto-lock position of the join member 248 allows the impact member 266 to be rotationally driven by the electric motor 212 of the power tool.

The forward auto-lock position of the join member 248 also forces the impact member 266 into engagement with the impact plate 274. In particular, when the join member 248 is moved into the forward auto-lock position, the rearward flange 310 of the impact member 266 is engaged by the interior step 306 of the join member 248 so as to move the impact member 266 in a forward (distal) direction, i.e., towards the impact plate 274. Thus, as impact member 266 is rotationally driven by the electric motor 212 of the power tool, the impact member 266 rotationally drives the impact plate 274 to thereby tighten or loosen the jaws 252 of the chuck 210.

The axial position of the join member 248 is controlled by the mode selector 220 (see Fig. 25). As best seen in Fig. 39, the mode selector 220 comprises a mode sleeve 318 that is disposed about the forward portion of the gearbox 214 and rearward portion of the join member 248. The mode sleeve 318 is rotatable about both the gearbox 214 and the join member 248. Rearward (proximal) axial movement of the mode sleeve 318 is prevented by a flange on the gearbox 214, and forward (distal) axial movement of the mode sleeve 318 is prevented by the chuck shell 222.

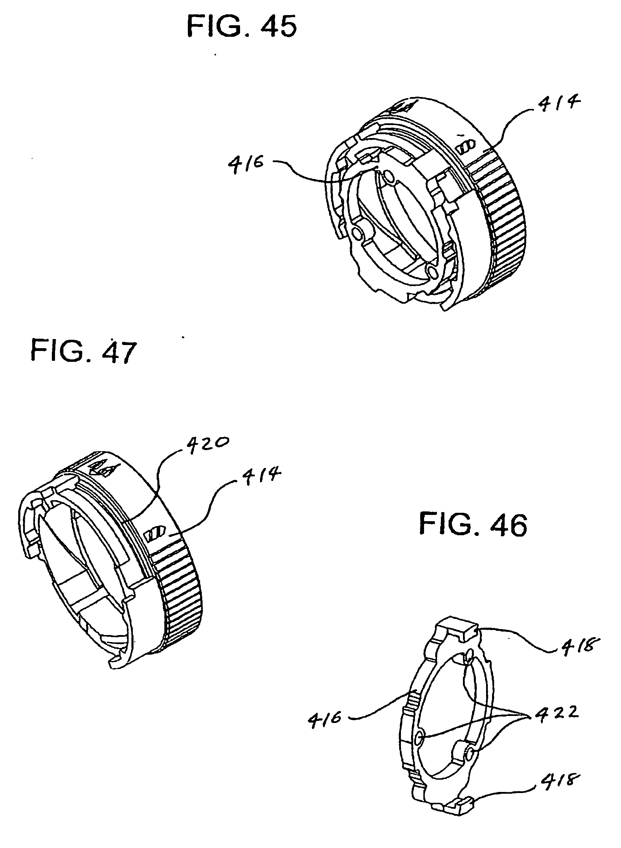

In an alternative design illustrated in Figs. 45-47, the mode sleeve 414 is axially retained by a spring plate holder 416 that is secured to the gearbox housing. In particular, the spring plate holder 416 has a pair of hooks 418 (see Fig. 46) that are configured to engage rails 420 on the outer surface of the mode sleeve 414 (see Fig. 47). The spring plate holder 416 further comprises screw holes 422 for fastening the spring plate holder 416 to the gearbox housing.

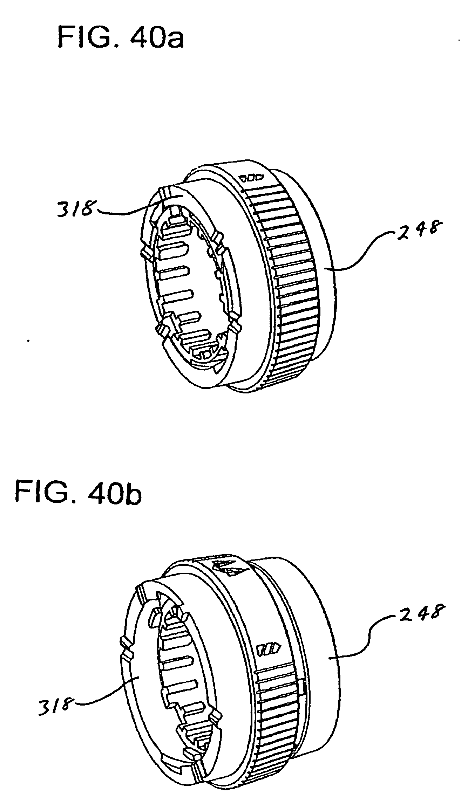

The inside surface of the mode sleeve 318 comprises a pair of slots or grooves 320 that are engaged by the bosses 314 projecting outwardly from the outer surface of the join member 248. The grooves 320 each comprise a central portion 322 that is helically disposed about the inside surface of the mode sleeve 318. The central portions 322 are configured so as to engage the bosses 314 and move the join member 248 in an axial direction upon rotation of the mode sleeve 318. For example, rotation of the mode sleeve 318 in a counterclockwise direction causes the join member 248 to move in a forward direction (and into auto-lock mode), as shown in Fig. 40b, whereas rotation of the mode sleeve 318 in a clockwise direction causes the join member 248 to move in a rearward direction (and into drill mode), as shown in Fig. 40a. Either or both ends of the grooves 320 may also comprise an end portion 324 that is disposed generally perpendicular to the longitudinal axis of the chuck 210. The end portions 324 are configured to prevent any forces that may be transferred to the mode sleeve 318 by the bosses 314 during operation of the power tool from inadvertently rotating he mode sleeve 318.

The mode sleeve 318 further comprises a pair of inwardly projecting tabs 326 that are configured to engage the sloped recesses 316 on the outside surface of the join member 248. Like the bosses 314 and grooves 320 described above, the tabs 326 and sloped recesses 316 are configured to move the join member 248 in an axial direction upon rotation of the mode sleeve 318. Indicia 328 may be provided on the exterior surface of the mode sleeve 318, as well as on the power tool housing, to indicate the rotational position of the mode sleeve 318, i.e., drill mode or auto-lock mode. The exterior surface of the mode sleeve 318 may also be knurled, machined or otherwise coated to improve gripping thereof.

While preferred embodiments of the invention have been described, it should be understood that the invention is not so limited, and modifications may be made without departing from the invention. The scope of the invention is defined by the appended claims, and all devices that come within the meaning of the claims, either literally or by equivalence, are intended to be embraced therein.

## Claims

1. A chuck (10; 210) for use with a power too] having a housing and a rotatable drive shaft (16; 216), comprising:
a body (86; 230) comprising a rearward portion configured to be selectively rotationally coupled to a drive shaft (16; 216) of a power tool and a forward portion configured to receive a shaft of a tool bit, the body (86; 230) being configured to be selectively rotationally coupled to a housing of the power tool;
a plurality of jaws (90; 252) movably disposed within said forward portion of said body (86; 230) and extending angularly from a longitudinal axis of said body, said jaws (90; 252) comprising jaw faces on inside surfaces of front ends thereof that are configured to engage a tool bit, said jaws (90; 252) further comprising threads (94) formed on outside surfaces of rear portions thereof;
an adjustment ring (98; 258) mounted about said body (86; 230) and threadably engaged with the threads (94) of said jaws (90; 252), said adjustment ring (98; 258) being rotatable relative to said body (86; 230) so as to advance or retract said jaws (90; 252), the adjustment ring (98; 258) being configured to be selectively rotationally coupled to the drive shaft (16; 216) of the power tool; and
a mode selector (20; 220) for placing the chuck (10; 210) in either drill mode or auto-lock mode, the chuck being **characterized in that**
when in drill mode, the body (86; 230) is rotationally coupled to the drive shaft (16; 216) and is rotatable relative to the power tool housing, thereby allowing the body (86; 230) to be rotationally driven by the drive shaft (16; 216), and **in that**
when in auto-lock mode, the body (86; 230) is rotatable relative to the drive shaft (16; 216) and is rotationally coupled to the housing, and the adjustment ring (98; 258) is rotationally coupled to the drive shaft (16; 216), thereby allowing the adjustment ring (98; 258) to be rotationally driven by the drive shaft (16; 216) relative to the body (86; 230).

2. The chuck (10; 210) according to claim 1 further comprising an impact member (48; 266) and an impact plate (114; 274), the impact member being configured to be rotationally coupled to the drive shaft (16; 216) of the power tool, the impact plate being rotational ly coupled to the adjustment ring (98; 258), the impact member being configured to engage the impact plate in auto-lock mode and not engage the impact plate in drill mode, the impact member and impact plate being configured to disengage from each other in auto-lock mode when a predetermined rotational force is transmitted therebetween.

3. The chuck (10; 210) according to claim 2, wherein the impact member (48; 266) and impact plate (114; 274) each comprise at least one chamfered block (54; 124; 272, 276) having an angled surface, the angled surface of chamfered block (54; 272) of the impact member being configured to engage the angled surface of the chamfered block (124; 276) of the impact plate when in auto-lock mode, further wherein the angled surface of chamfered block of the impact member is configured to slide over the angled surface of the chamfered block of the impact plate when the predetermined rotational force is transmitted between the impact member and the impact plate, thereby allowing the impact member to rotate relative to the impact plate.

4. The chuck (10; 210) according to claims 2 or 3, wherein at least one of the impact member (48; 266) and the impact plate (114; 274) is axially movable along the longitudinal axis of said body (86; 230).

5. The chuck (10; 210) according to any one of claims 2 to 4, wherein the impact member (48; 266) is configured to be axially movable relative to the drive shaft (16; 216) between a first position when in the drill mode and a second position when in the auto-lock mode, the impact member not being engaged with the impact plate (114; 274) when in the first position and being engaged with the impact plate when in the second position.

6. The chuck (10; 210) according to any one of claims 2 to 5, wherein the impact member (48; 266) is selectively rotationally coupled to the body (86; 230), the impact member being rotationally coupled to the body in drill mode and being rotatable relative to the body in auto-lock mode.

7. The chuck (10; 210) according to any one of claims 2 to 5, wherein the impact member (266) comprises a ring gear that is engage with a set of planetary gears (232) operably connected to the body (230), the planetary gears being configured to engage a sun gear (228) on the drive shaft (216), further wherein the impact member (266) is locked against rotation relative to the housing when in drill mode to thereby permit the body to be rotatably driven by the drive shaft, and further wherein the body is locked against rotation relative to the housing when in auto-lock mode to thereby permit the impact member to be rotatably driven by the drive shaft.

8. The chuck (10; 210) according to any one of claims 2 to 5, wherein the mode selector (20; 220) comprises a mode sleeve operatively connected to the impact member (48; 266) such that rotational movement of the mode sleeve between auto-lock and drill modes causes axial translation of the impact member into or out of engagement with the impact plate (114; 274).

9. The chuck (10; 210) according to claim 8, wherein a lock mechanism is operatively connected to the mode sleeve (72; 318) and is configured to be rotationally coupled to the housing of the power tool, the lock mechanism being axially movable so as to selectively lock the body (86; 230) against rotation relative to the housing when in auto-lock mode.

10. The chuck (10; 210) according to claim 9, wherein the lock mechanism comprises a shift block (56) that selectively engages a chuck shell (22) in auto-lock mode, the chuck shell being rotationally secured to the forward portion of the body (86).

11. The chuck (10;230) according to claim 10, wherein the shift block (56) comprises an outwardly projecting post (68) that engages a groove (74) disposed on an interior surface of the mode sleeve, the groove being configured to cause axial movement of the shift block upon rotation of the mode sleeve.

12. The chuck (10; 210) according to claim 11, wherein a portion (76) of the groove (74) is helically disposed about the interior surface of the mode sleeve.

13. The chuck (10;210) according to claim 11, wherein the post (68) extends through a channel (66) longitudinally disposed in the shift block (56), the shift block being configured to be rotationally coupled to the housing of the power tool.

14. The chuck (10; 210) according to claim 9, wherein the lock mechanism comprises a join member (248) that selectively engages the rearward portion of the body (230) in auto-lock mode.

15. The chuck (10; 210) according to claim 14, wherein the join member (248) comprises an outwardly projecting boss (314) that engages a groove (320) disposed on an interior surface of the mode sleeve (318), the groove being configured to cause axial movement of the join member upon rotation of the mode sleeve.

16. The chuck (10; 210) according to claim 15, wherein a portion (322) of the groove (320) is helically disposed about the interior surface of the mode sleeve (318).

17. The chuck (10; 210) according to any one of claims 14 to 16, wherein the join member (248) comprises a front set of ribs (304) that selectively engage the impact member (266) in drill mode, the join member further comprising a rear set of ribs (308) that selectively engage the body (230) in auto-lock mode.

18. The chuck (10; 210) according to claim 17, wherein the rear set of ribs (308) are configured to engage slots (313) on a gearbox (214) housing operably connected to the power tool so as to rotationally couple the join member (248) to the power tool.

19. The chuck (10; 210) according to any one of claims 2 to 18, wherein the impact plate (114; 274) is axially movable relative to the adjustment ring (98; 258) to permit the impact plate to disengage from the impact member (48; 266) in auto-lock mode when the predetermined rotational force is transmitted between the impact member and the impact plate.

20. The chuck (10; 210) according to claim 19, wherein a biasing spring (126; 298) is operably engaged with the impact plate (114; 274) so as to bias the impact plate into engagement with the impact member (48; 266) in auto-lock mode.

21. The chuck (10; 210) according to claim 20, wherein the biasing spring (126; 298) is disposed about a nut sleeve (104; 286), the nut sleeve being rotationally coupled to the adjustment ring (98; 258).

22. The chuck (10; 210) according to any preceding claim further comprising a power tool having a housing and a rotatable drive shaft (16; 216), wherein the rearward portion of the body (86; 230) is selectively rotationally coupled to the drive shaft in drill mode and is rotatable relative to the housing in auto-lock mode.

23. The chuck (10; 210) according to any preceding claim, wherein the body (86; 230) is configured to be selectively rotationally coupled to one of a tool housing, a gearbox housing, and a stationary component of the power tool.

## Patentansprüche

1. Spannfutter (10; 210) zur Verwendung mit einem angetriebenen Werkzeug, das ein Gehäuse und eine drehbare Antriebswelle (16; 216) hat, wobei das Spannfutter Folgendes umfasst:
einen Korpus (86; 230), der einen hinteren Abschnitt, der dafür konfiguriert ist, selektiv zum Drehen an eine Antriebswelle (16; 216) eines angetriebenen Werkzeugs gekoppelt zu werden, und einen vorderen Abschnitt, der dafür konfiguriert ist, einen Schaft einer Werkzeugspitze aufzunehmen, umfasst, wobei der Korpus (86; 230) dafür konfiguriert ist, selektiv zum Drehen an ein Gehäuse des angetriebenen Werkzeugs gekoppelt zu werden,
mehrere Klemmbacken (90; 252), die beweglich innerhalb des vorderen Abschnitts des Korpus (86; 230) angeordnet sind und sich winklig von einer Längsachse des Korpus aus erstrecken, wobei die Klemmbacken (90; 252) Klemmbackenflächen auf Innenflächen von vorderen Enden derselben umfassen, die dafür konfiguriert sind, eine Werkzeugspitze in Eingriff zu nehmen, wobei die Klemmbacken (90; 252) ferner Gewindegänge (94) umfassen, die auf Außenflächen von hinteren Abschnitten derselben geformt sind,
einen Einstellring (98; 258), der um den Korpus (86; 230) angeordnet und schraubend in Eingriff mit den Gewindegängen (94) der Klemmbacken (90; 252) gebracht ist, wobei der Einstellring (98; 258) im Verhältnis zu dem Korpus (86; 230) gedreht werden kann, um so die Klemmbacken (90; 252) vorzuschieben oder zurückzuziehen, wobei der Einstellring (98; 258) dafür konfiguriert ist, selektiv zum Drehen an die Antriebswelle (16; 216) des angetriebenen Werkzeugs gekoppelt zu werden, und
eine Modus-Wählvorrichtung (20; 220), um das Spannfutter (10; 210) entweder in einen Bohrmodus oder in einen Selbstverriegelungsmodus zu bringen, wobei das Spannfutter **dadurch gekennzeichnet ist, dass**,
wenn es sich in dem Bohrmodus befindet, der Korpus (86; 230) zum Drehen an die Antriebswelle (16; 216) gekoppelt ist und im Verhältnis zu dem Gehäuses des angetriebenen Werkzeugs gedreht werden kann, wodurch ermöglicht wird, dass der Korpus (86; 230) zum Drehen durch die Antriebswelle (16; 216) angetrieben wird, und dadurch, dass,
wenn es sich in dem Selbstverriegelungsmodus befindet, der Korpus (86; 230) im Verhältnis zu der Antriebswelle (16; 216) gedreht werden kann und zum Drehen an das Gehäuse gekoppelt ist und der Einstellring (98; 258) zum Drehen an die Antriebswelle (16; 216) gekoppelt ist, wodurch ermöglicht wird, dass der Einstellring (98; 258) zum Drehen im Verhältnis zu dem Korpus (86; 230) durch die Antriebswelle (16; 216) angetrieben wird.

2. Spannfutter (10; 210) nach Anspruch 1, das ferner ein Schlagelement (48; 266) und eine Schlagplatte (114; 274) umfasst, wobei das Schlagelement dafür konfiguriert ist, zum Drehen an die Antriebswelle (16; 216) des angetriebenen Werkzeugs gekoppelt zu werden, wobei die Schlagplatte dafür konfiguriert ist, zum Drehen an den Einstellring (98; 258) gekoppelt zu werden, wobei das Schlagelement dafür konfiguriert ist, die Schlagplatte im Selbstverriegelungsmodus in Eingriff zu nehmen und die Schlagplatte im Bohrmodus nicht in Eingriff zu nehmen, wobei das Schlagelement und die Schlagplatte dafür konfiguriert sind, sich im Selbstverriegelungsmodus voneinander auszurücken, wenn eine vorbestimmte Drehkraft zwischen denselben übertragen wird.

3. Spannfutter (10; 210) nach Anspruch 2, wobei das Schlagelement (48; 266) und die Schlagplatte (114; 274) jeweils wenigstens einen abgeschrägten Block (54; 124; 272, 276) umfasst, der eine abgewinkelte Fläche hat, wobei die abgewinkelte Fläche des abgeschrägten Blocks (54; 272) des Schlagelements dafür konfiguriert ist, die abgewinkelte Fläche des abgeschrägten Blocks (124; 276) der Schlagplatte in Eingriff zu nehmen, wenn es sich im Selbstverriegelungsmodus befindet, wobei ferner die abgewinkelte Fläche des abgeschrägten Blocks des Schlagelements dafür konfiguriert ist, über die abgewinkelte Fläche des abgeschrägten Blocks der Schlagplatte zu gleiten, wenn die vorbestimmte Drehkraft zwischen dem Schlagelement und der Schlagplatte übertragen wird, wodurch ermöglicht wird, dass sich das Schlagelement im Verhältnis zu der Schlagplatte dreht.

4. Spannfutter (10; 210) nach Anspruch 2 oder 3, wobei wenigstens eines von dem Schlagelement (48; 266) und der Schlagplatte (114; 274) in Axialrichtung entlang der Längsachse des Korpus (86; 230) bewegt werden kann.

5. Spannfutter (10; 210) nach einem der Ansprüche 2 bis 4, wobei das Schlagelement (48; 266) dafür konfiguriert ist, in Axialrichtung im Verhältnis zu der Antriebswelle (16; 216) bewegt werden zu können zwischen einer ersten Stellung, wenn es sich im Bohrmodus befindet, und einer zweiten Stellung, wenn es sich im Selbstverriegelungsmodus befindet, wobei das Schlagelement nicht in Eingriff mit der Schlagplatte (114; 274) gebracht ist, wenn es sich in der ersten Stellung befindet, und in Eingriff mit der Schlagplatte gebracht ist, wenn es sich in der zweiten Stellung befindet.

6. Spannfutter (10; 210) nach einem der Ansprüche 2 bis 5, wobei das Schlagelement (48; 266) selektiv zum Drehen an den Korpus (86; 230) gekoppelt ist, wobei das Schlagelement im Bohrmodus zum Drehen an den Korpus gekoppelt ist und im Selbstverriegelungsmodus im Verhältnis zu dem Korpus gedreht werden kann.

7. Spannfutter (10; 210) nach einem der Ansprüche 2 bis 5, wobei das Schlagelement (266) ein Hohlrad umfasst, das in Eingriff mit einem Satz von Planetenrädern (232) gebracht ist, die wirksam mit dem Korpus (230) verbunden sind, wobei die Planetenräder dafür konfiguriert sind, ein Sonnenrad (228) auf der Antriebswelle (216) in Eingriff zu nehmen, wobei ferner das Schlagelement (266) gegen eine Drehung im Verhältnis zu dem Gehäuse verriegelt ist, wenn es sich im Bohrmodus befindet, um dadurch zu ermöglichen, dass der Korpus zum Drehen durch die Antriebswelle angetrieben wird, und wobei ferner der Korpus gegen eine Drehung im Verhältnis zu dem Gehäuse verriegelt ist, wenn es sich im Selbstverriegelungsmodus befindet, um dadurch zu ermöglichen, dass das Schlagelement zum Drehen durch die Antriebswelle angetrieben wird.

8. Spannfutter (10; 210) nach einem der Ansprüche 2 bis 5, wobei die Modus-Wählvorrichtung (20; 220) eine Modushülse umfasst, die wirksam mit dem Schlagelement (48; 266) verbunden ist derart, dass eine Drehbewegung der Modushülse zwischen dem Selbstverriegelungs- und dem Bohrmodus eine axiale Verschiebung des Schlagelements in einen Eingriff mit der Schlagplatte (114; 274) oder aus demselben bewirkt.

9. Spannfutter (10; 210) nach Anspruch 8, wobei ein Verriegelungsmechanismus wirksam mit der Modushülse (72; 318) verbunden ist und dafür konfiguriert ist, zum Drehen an das Gehäuse des angetriebenen Werkzeugs gekoppelt zu werden, wobei der Verriegelungsmechanismus axial bewegt werden kann, um so den Korpus (86; 230) selektiv gegen eine Drehung im Verhältnis zu dem Gehäuse zu verriegeln, wenn es sich im Selbstverriegelungsmodus befindet.

10. Spannfutter (10; 210) nach Anspruch 9, wobei der Verriegelungsmechanismus einen Umstellungsblock (56) umfasst, der im Selbstverriegelungsmodus selektiv eine Spannfutterhülle (22) in Eingriff nimmt, wobei die Spannfutterhülle zum Drehen an dem vorderen Abschnitt des Korpus (86) befestigt ist.

11. Spannfutter (10; 230) nach Anspruch 10, wobei der Umstellungsblock (56) einen nach außen vorspringenden Pfosten (68) umfasst, der eine Rille (74) in Eingriff nimmt, die auf einer Innenfläche der Modushülse angeordnet ist, wobei die Rille dafür konfiguriert ist, auf eine Drehung der Modushülse hin eine axiale Bewegung des Umstellungsblocks zu bewirken.

12. Spannfutter (10; 210) nach Anspruch 11, wobei ein Abschnitt (76) der Rille (74) spiralförmig um die Innenfläche der Modushülse angeordnet ist.

13. Spannfutter (10; 210) nach Anspruch 11, wobei sich der Pfosten (68) durch einen Kanal (66) erstreckt, der in Längsrichtung in dem Umstellungsblock (56) angeordnet ist, wobei der Umstellungsblock dafür konfiguriert ist, zum Drehen an das Gehäuse des angetriebenen Werkzeugs gekoppelt zu werden.

14. Spannfutter (10; 210) nach Anspruch 9, wobei der Verriegelungsmechanismus ein Verbindungselement (248) umfasst, das im Selbstverriegelungsmodus selektiv den hinteren Abschnitt des Korpus (230) in Eingriff nimmt.

15. Spannfutter (10; 210) nach Anspruch 14, wobei das Verbindungselement (248) einen nach außen vorspringenden Vorsprung (314) umfasst, der eine Rille (320) in Eingriff nimmt, die auf einer Innenfläche der Modushülse (318) geformt ist, wobei die Rille dafür eingerichtet ist, auf eine Drehung der Modushülse hin eine axiale Bewegung des Verbindungselements zu bewirken.

16. Spannfutter (10; 210) nach Anspruch 15, wobei ein Abschnitt (322) der Rille (320) spiralförmig um die Innenfläche der Modushülse (318) angeordnet ist.

17. Spannfutter (10; 210) nach einem der Ansprüche 14 bis 16, wobei das Verbindungselement (248) einen vorderen Satz von Rippen (304) umfasst, die im Bohrmodus selektiv des Schlagelement (266) in Eingriff nehmen, wobei das Verbindungselement ferner einen hinteren Satz von Rippen (308) umfasst, die im Selbstverriegelungsmodus selektiv den Korpus (230) in Eingriff nehmen.

18. Spannfutter (10; 210) nach Anspruch 17, wobei der hintere Satz von Rippen (308) dafür konfiguriert ist, Schlitze (313) an einem Gehäuse eines Getriebes (214) in Eingriff zu nehmen, das wirksam mit dem angetriebenen Werkzeug verbunden ist, um so das das Verbindungselement (248) zum Drehen an das angetriebene Werkzeug zu koppeln.

19. Spannfutter (10; 210) nach einem der Ansprüche 2 bis 18, wobei die Schlagplatte (114; 274) axial im Verhältnis zu dem Einstellungsring (98; 258) bewegt werden kann, um zu ermöglichen, dass sich die Schlagplatte im Selbstsicherungsmodus von dem Schlagelement (48; 266) ausrückt, wenn die vorbestimmte Drehkraft zwischen dem Schlagelement und der Schlagplatte übertragen wird.

20. Spannfutter (10; 210) nach Anspruch 19, wobei eine Vorspannfeder (126; 298) wirksam in Eingriff mit der Schlagplatte (114; 274) gebracht ist, um so die Schlagplatte im Selbstverriegelungsmodus in einen Eingriff mit dem Schlagelement (48; 266) vorzuspannen.

21. Spannfutter (10; 210) nach Anspruch 20, wobei die Vorspannfeder (126; 298) um eine Mutternhülse (104; 286) angeordnet ist, wobei die Mutternhülse zum Drehen an den Einstellungsring (98; 258) gekoppelt ist.

22. Spannfutter (10; 210) nach einem der vorhergehenden Ansprüche, der ferner ein angetriebenes Werkzeug umfasst, das ein Gehäuse und eine drehbare Antriebswelle (16; 216) hat, wobei der hintere Abschnitt des Korpus (86; 230) im Bohrmodus selektiv zum Drehen an die Antriebswelle gekoppelt wird und im Selbstverriegelungsmodus im Verhältnis zu dem Gehäuse gedreht werden kann.

23. Spannfutter (10; 210) nach einem der vorhergehenden Ansprüche, wobei der Korpus (86; 230) dafür konfiguriert ist, selektiv zum Drehen an eines von einem Werkzeuggehäuse, einem Getriebegehäuse und einem feststehenden Bauteil des angetriebenen Werkzeugs gekoppelt zu werden.

## Revendications

1. Mandrin (10 ; 210), destiné à être utilisé avec un outil électrique comportant un boîtier et un arbre d'entraînement rotatif (16 ; 216), comprenant :
un corps (86 ; 230), comprenant une partie arrière, configurée de sorte à être accouplée sélectivement de manière rotative à un arbre d'entraînement (16 ; 216) d'un outil électrique, et une partie avant, configurée de sorte à recevoir un arbre d'un outil rapporté, le corps (86 ; 230) étant configuré de sorte à être accouplé sélectivement de manière rotative à un boîtier de l'outil électrique ;
plusieurs mâchoires (90 ; 252), agencées de manière mobile dans ladite partie avant dudit corps (86 ; 230) et s'étendant angulairement à partir d'un axe longitudinal dudit corps, lesdites mâchoires (90 ; 252) comprenant des faces de mâchoire sur les surfaces internes de leurs extrémités, configurées de sorte à s'engager dans un outil rapporté, lesdites mâchoires (90 ; 252) comprenant en outre des filetages (94) formés sur les surfaces externes de leurs parties arrière ;
une bague d'ajustement (98 ; 258), montée sur ledit corps (86 ; 230) et engagée par filetages dans les filetages (4) desdites mâchoires (90 ; 252), ladite bague d'ajustement (98 ; 258) pouvant tourner par rapport audit corps (86 ; 230), de sorte à faire avancer ou rétracter lesdites mâchoires (90 ; 252), la bague d'ajustement (98 ; 258) étant configurée de sorte à être accouplée sélectivement de manière rotative à l'arbre d'entraînement (16 ; 216) de l'outil électrique ; et
un sélecteur de mode (20 ; 220) pour placer le mandrin (10 ; 210) dans un mode de perçage ou un mode à auto-verrouillage, le mandrin étant **caractérisé en ce que**
dans le mode de perçage, le corps (86 ; 230) est accouplé de manière rotative à l'arbre d'entraînement (16 ; 216) et peut tourner par rapport au boîtier de l'outil électrique, permettant ainsi l'entraînement rotatif du corps (86 ; 230) par l'arbre d'entraînement (16 ; 216), et **en ce que**
dans le mode à auto-verrouillage, le corps (86 ; 230) peut tourner par rapport à l'arbre d'entraînement (16 ; 216) et est accouplé de manière rotative au boîtier, la bague d'ajustement (98 ; 258) étant accouplée de manière rotative à l'arbre d'entraînement (16 ; 216), permettant ainsi l'entraînement rotatif de la bague d'ajustement (98 ; 258) par l'arbre d'entraînement (16 ; 216) par rapport au corps (86 ; 230).

2. Mandrin (10 ; 210) selon la revendication 1, comprenant en outre un élément d'impact (48 ; 266) et une plaque d'impact (114 ; 274), l'élément d'impact étant configuré de sorte à être accouplé de manière rotative à l'arbre d'entraînement (16 ; 216) de l'outil électrique, la plaque d'impact étant accouplée de manière rotative à la bague d'ajustement (98 ; 258), l'élément d'impact étant configuré de sorte à s'engager dans la plaque d'impact dans le mode à auto-verrouillage, et à ne pas s'engager dans la plaque d'impact dans le mode de perçage, l'élément d'impact et la plaque d'impact étant configurés de sorte à se dégager l'un de l'autre dans le mode à auto-verrouillage lors de la transmission d'une force de rotation prédéterminée entre eux.

3. Mandrin (10 ; 210) selon la revendication 2, dans lequel l'élément d'impact (48 :; 266) et la plaque d'impact (114 ; 274) comprennent chacun au moins un bloc chanfreiné (54 ; 124 ; 272, 276) comportant une surface inclinée, la surface inclinée du bloc chanfreiné (54 ; 272) de l'élément d'impact étant configurée de sorte à s'engager dans la surface inclinée du bloc chanfreiné (124 ; 276) de la plaque d'impact dans le mode à auto-verrouillage, la surface inclinée du bloc chanfreiné de l'élément d'impact étant en outre configurée de sorte à glisser au-dessus de la surface inclinée du bloc chanfreiné de la plaque d'impact lors de la transmission de la force de rotation prédéterminée entre l'élément d'impact et la plaque d'impact, permettant ainsi la rotation de l'élément d'impact par rapport à la plaque d'impact.

4. Mandrin (10 ; 210) selon les revendications 2 ou 3, dans lequel au moins un élément, l'élément d'impact (48 ; 266) ou la plaque d'impact (114 ; 274), peut être déplacé axialement le long de l'axe longitudinal dudit corps (86 ; 230).

5. Mandrin (10 ; 210) selon l'une quelconque des revendications 2 à 4, dans lequel l'élément d'impact (48 ; 266) est configuré de sorte à pouvoir être déplacé axialement par rapport à l'arbre d'entraînement (16 ; 216) entre une première position, lorsqu'il se trouve dans le mode de perçage, et une deuxième position, lorsqu'il se trouve dans le mode à auto-verrouillage, l'élément d'impact n'étant pas engagé dans la plaque d'impact (114 ; 274) dans la première position et étant engagé dans la plaque d'impact dans la deuxième position.

6. Mandrin (10 ; 210) selon l'une quelconque des revendication 2 à 5, dans lequel l'élément d'impact (48 ; 266) peut être accouplé sélectivement de manière rotative au corps (86 ; 230), l'élément d'impact étant accouplé de manière rotative au corps dans le mode de perçage, et pouvant tourner par rapport au corps dans le mode à auto-verrouillage.

7. Mandrin (10 ; 210) selon l'une quelconque des revendications 2 à 5, dans lequel l'élément d'impact (266) comprend une couronne engagée dans un ensemble d'engrenages planétaires (232), connecté en service au corps (230), les engrenages planétaires étant destinés à s'engager dans un pignon planétaire (228) sur l'arbre d'entraînement (216), l'élément d'impact (266) étant en outre verrouillé contre une rotation par rapport au boîtier lorsqu'il se trouve dans le mode de perçage, pour permettre ainsi l'entraînement rotatif du corps par l'arbre d'entraînement, et le corps étant en outre verrouillé contre une rotation par rapport au boîtier lorsqu'il se trouve dans le mode à auto-verrouillage, pour permettre ainsi l'entraînement rotatif de l'élément d'impact par l'arbre d'entraînement.

8. Mandrin (10 ; 210) selon l'une quelconque des revendications 2 à 5, dans lequel le sélecteur de mode (20 ; 222) comprend un manchon de sélection du mode, connecté en service à l'élément d'impact (48 ; 266), de sorte que le déplacement rotatif du manchon de sélection du mode entre les modes à auto-verrouillage et à perçage entraîne une translation axiale de l'élément d'impact et son engagement dans la plaque d'impact (114 ; 274) ou son dégagement de celle-ci.

9. Mandrin (10 ; 210) selon la revendication 8, dans lequel un mécanisme de verrouillage est connecté en service au manchon de sélection du mode (72 ; 318) et est configuré de sorte à être accouplé de manière rotative au boîtier de l'outil électrique, le mécanisme de verrouillage pouvant être déplacé axialement de sorte à verrouiller sélectivement le corps (86 ; 230) contre une rotation par rapport au boîtier lorsqu'il se trouve dans le mode à auto-verrouillage.

10. Mandrin (10; 210) selon la revendication 9, dans lequel le mécanisme de verrouillage comprend un bloc de décalage (56), s'engageant sélectivement dans une coque du mandrin (22) dans le mode à auto-verrouillage, la coque du mandrin étant fixée de manière rotative sur la partie avant du corps (86).

11. Mandrin (10 ; 230) selon la revendication 10, dans lequel le bloc de décalage (56) comprend un montant débordant vers l'extérieur (68), s'engageant dans une rainure (74) agencée sur une surface interne du manchon de sélection du mode, la rainure étant destinée à entraîner un déplacement axial du bloc de décalage lors de la rotation du manchon de sélection du mode.

12. Mandrin (10 ; 210) selon la revendication 11, dans lequel une partie (76) de la rainure (74) est agencée de manière hélicoïdale autour de la surface interne du manchon de sélection du mode.

13. Mandrin (10 ; 210) selon la revendication 11, dans lequel le montant (68) s'étend à travers un canal (66) agencé longitudinalement dans le bloc de décalage (56), le bloc de décalage étant configuré de sorte à être accouplé de manière rotative au boîtier de l'outil électrique.

14. Mandrin (10 ; 210) selon la revendication 9, dans lequel le mécanisme de verrouillage comprend un élément de liaison (248), s'engageant sélectivement dans la partie arrière du corps (230) dans le mode à auto-verrouillage.

15. Mandrin (10 ; 210) selon la revendication 14, dans lequel l'élément de liaison (248) comprend un bossage débordant vers l'extérieur (314), s'engageant dans une rainure (320) agencée sur une surface interne du manchon de sélection du mode (318), la rainure étant destinée à entraîner un déplacement axial de l'élément de liaison lors de la rotation du manchon de sélection du mode.

16. Mandrin (10 ; 210) selon la revendication 15, dans lequel une partie (322) de la rainure (320) est agencée de manière hélicoïdale autour de la surface interne du manchon de sélection du mode (318).

17. Mandrin (10 ; 210) selon l'une quelconque des revendications 14 à 16, dans lequel l'élément de liaison (248) comprend un groupe frontal de nervures (304), s'engageant sélectivement dans l'élément d'impact (266) dans le mode de perçage, l'élément de liaison comprenant en outre un groupe arrière de nervures (308), s'engageant sélectivement dans le corps (230) dans le mode à auto-verrouillage.

18. Mandrin (10 ; 210) selon la revendication 17, dans lequel les nervures du groupe arrière (308) sont configurées de sorte à s'engager dans des fentes (313) sur un carter de boîte d'engrenages (214) connecté en service à l'outil électrique, de sorte à assurer l'accouplement rotatif de l'élément de liaison (248) à l'outil électrique.

19. Mandrin (10 ; 210) selon l'une quelconque des revendications 2 à 18, dans lequel la plaque d'impact (114 ; 274) peut être déplacée axialement par rapport à la bague d'ajustement (98 ; 258) pour permettre le dégagement de la plaque d'impact de l'élément d'impact (48 ; 266) dans le mode à auto-verrouillage lors de la transmission de la force de rotation prédéterminée entre l'élément d'impact et la plaque d'impact.

20. Mandrin (10 ; 210) selon la revendication 19, dans lequel un ressort poussoir (126 ; 298) est engagé en service dans la plaque d'impact (114 ; 274), de sorte à engager par poussée la plaque d'impact dans l'élément d'impact (48 ; 266) dans le mode à auto-verrouillage.

21. Mandrin (10 ; 210) selon la revendication 20, dans lequel le ressort poussoir (126 ; 298) est agencé autour d'un écrou manchon (104 ; 286), l'écrou manchon étant accouplé de manière rotative à la bague d'ajustement (98 ; 258).

22. Mandrin (10 ; 210) selon l'une quelconque des revendications précédentes, comprenant en outre un outil électrique comportant un boîtier et un arbre d'entraînement rotatif (16 ; 216), la partie arrière du corps (86 ; 230) étant accouplée sélectivement de manière rotative à l'arbre d'entraînement dans le mode de perçage et pouvant tourner par rapport au boîtier dans le mode à auto-verrouillage.

23. Mandrin (10 ; 210) selon l'une quelconque des revendications précédentes, dans lequel le corps (86 ; 230) est configuré de sorte à être accouplé sélectivement de manière rotative à l'un des éléments suivants : un boîtier de l'outil, un carter de boîte d'engrenages ou un composant stationnaire de l'outil électrique.
